# EUROPEAN PATENT APPLICATION

(11) **EP 4 124 143 A1**
(43) Date of publication of application: **25.01.2023**
(21) Application number: 22186111.5
(22) Date of filing: 20.07.2022
(51) Int. Cl.: H04W 72/12, H04L 5/00, H04W 52/02

(54) **METHOD AND APPARATUS FOR PDCCH SKIPPING AND SCHEDULING REQUEST**

(30) Priority: 21.07.2021 KR 20210095560 U
(71) Applicant: Samsung Electronics Co., Ltd., Gyeonggi-do, 16677 (KR)
(72) Inventor: AGIWAL, Anil, 16677 Suwon-si (KR)
(74) Representative: HGF

(57) **Abstract**

The disclosure relates to a 5G or 6G communication system for supporting a higher data transmission rate. A method performed by a terminal in a wireless communication system is provided. The method includes receiving, from a base station, a radio resource control (RRC) message including information on a physical downlink control channel (PDCCH) skipping duration, receiving, from the base station, downlink control information (DCI) indicating a PDCCH skipping for a serving cell of a cell group, and ignoring the PDCCH skipping on all serving cells of the cell group, in case that a scheduling request (SR) is sent on the serving cell of the cell group and is pending.

## Description

### BACKGROUND

### 1. Field

The disclosure relates to a wireless communication system. Specifically, the disclosure relates to an apparatus, a method and a system for PDCCH monitoring.

### 2. Description of Related Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### SUMMARY

Aspects of the disclosure are to address at least the above-mentioned problems and/or disadvantages and to provide at least the advantages described below. Accordingly, an aspect of the disclosure is to provide a communication method and system for converging a fifth generation (5G) communication system for supporting higher data rates beyond a fourth generation (4G).

In accordance with an aspect of the disclosure, a method performed by a terminal in a wireless communication system is provided. The method includes receiving, from a base station, a radio resource control (RRC) message including information on a physical downlink control channel (PDCCH) skipping duration, receiving, from the base station, downlink control information (DCI) indicating a PDCCH skipping for a serving cell of a cell group, and ignoring the PDCCH skipping on all serving cells of the cell group, in case that a scheduling request (SR) is sent on the serving cell of the cell group and is pending.

In accordance with another aspect of the disclosure, a method performed by a base station in a wireless communication system is provided. The method includes transmitting, to a terminal, an RRC message including information on a PDCCH skipping duration, and transmitting, to the terminal, DCI indicating a PDCCH skipping for a serving cell of a cell group. The PDCCH skipping is ignored on all serving cells of the cell group, in case that an SR is received on the serving cell of the cell group and is pending.

In accordance with another aspect of the disclosure, a terminal in a wireless communication system is provided. The terminal includes a transceiver and a controller. The controller is configured to receive, from a base station via the transceiver, an RRC message including information on a PDCCH skipping duration, receive, from the base station via the transceiver, DCI indicating a PDCCH skipping for a serving cell of a cell group, and ignore the PDCCH skipping on all serving cells of the cell group, in case that an SR is sent on the serving cell of the cell group and is pending.

In accordance with another aspect of the disclosure, a base station in a wireless communication system is provided. The base station includes a transceiver and a controller. The controller is configured to transmit, to a terminal via the transceiver, an RRC message including information on a PDCCH skipping duration, and transmit via the transceiver, to the terminal, DCI indicating a PDCCH skipping for a serving cell of a cell group. The PDCCH skipping is ignored on all serving cells of the cell group, in case that an SR is received on the serving cell of the cell group and is pending.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 illustrates an example of PDCCH skipping in accordance with an embodiment of the disclosure;
FIG. 2 illustrates an example of a delayed UL grant due to a PDCCH skipping duration in accordance with an embodiment of the disclosure;
FIG. 3 illustrates an example of PDCCH skipping when an SR is transmitted and is pending in accordance with an embodiment of the disclosure;
FIG. 4 illustrates an example of PDCCH skipping when an SR is transmitted and is pending in accordance with an embodiment of the disclosure;
FIG. 5 illustrates an example of PDCCH skipping for a DRX group when an SR is transmitted and is pending in accordance with an embodiment of the disclosure;
FIG. 6 illustrates an example of PDCCH skipping for DRX groups when an SR is transmitted and is pending in accordance with an embodiment of the disclosure;
FIG. 7 illustrates an example of Option 1 for PDCCH skipping for DRX groups when an SR is transmitted and is pending in accordance with an embodiment of the disclosure;
FIG. 8 illustrates an example of Option 2 for PDCCH skipping for DRX groups when an SR is transmitted and is pending in accordance with an embodiment of the disclosure;
FIG. 9 illustrates an example of Option 3 for PDCCH skipping for DRX groups when an SR is transmitted and is pending in accordance with an embodiment of the disclosure;
FIG. 10 illustrates an example of PDCCH skipping for a DRX group or DRX groups when an SR is transmitted and is pending in accordance with an embodiment of the disclosure;
FIG. 11 illustrates an example of PDCCH skipping for a DRX group when an SR is transmitted and is pending in accordance with an embodiment of the disclosure;
FIG. 12 illustrates a block diagram of a terminal according to an embodiment of the disclosure; and
FIG. 13 illustrates a block diagram of a base station according to an embodiment of the disclosure.

Throughout the drawings, like reference numerals will be understood to refer to like parts, components, and structures.

### DETAILED DESCRIPTION

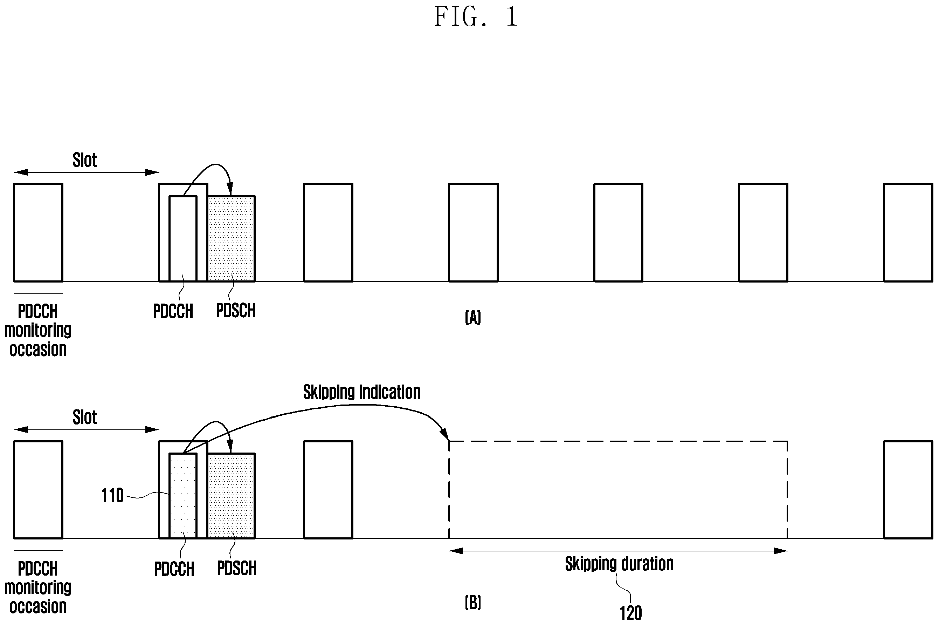

FIGS. 1 through 13, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

It is known to those skilled in the art that blocks of a flowchart (or sequence diagram) and a combination of flowcharts may be represented and executed by computer program instructions. These computer program instructions may be loaded on a processor of a general purpose computer, special purpose computer, or programmable data processing equipment. When the loaded program instructions are executed by the processor, they create a means for carrying out functions described in the flowchart. Because the computer program instructions may be stored in a computer readable memory that is usable in a specialized computer or a programmable data processing equipment, it is also possible to create articles of manufacture that carry out functions described in the flowchart. Because the computer program instructions may be loaded on a computer or a programmable data processing equipment, when executed as processes, they may carry out operations of functions described in the flowchart.

A block of a flowchart may correspond to a module, a segment, or a code containing one or more executable instructions implementing one or more logical functions, or may correspond to a part thereof. In some cases, functions described by blocks may be executed in an order different from the listed order. For example, two blocks listed in sequence may be executed at the same time or executed in reverse order.

In this description, the words "unit", "module" or the like may refer to a software component or hardware component, such as, for example, a field-programmable gate array (FPGA) or an application-specific integrated circuit (ASIC) capable of carrying out a function or an operation. However, a "unit", or the like, is not limited to hardware or software. A unit, or the like, may be configured so as to reside in an addressable storage medium or to drive one or more processors. Units, or the like, may refer to software components, object-oriented software components, class components, task components, processes, functions, attributes, procedures, subroutines, program code segments, drivers, firmware, microcode, circuits, data, databases, data structures, tables, arrays or variables. A function provided by a component and unit may be a combination of smaller components and units, and may be combined with others to compose larger components and units. Components and units may be configured to drive a device or one or more processors in a secure multimedia card.

Prior to the detailed description, terms or definitions necessary to understand the disclosure are described. However, these terms should be construed in a non-limiting way.

The "base station (BS)" is an entity communicating with a user equipment (UE) and may be referred to as BS, base transceiver station (BTS), node B (NB), evolved NB (eNB), access point (AP), 5G NB (5GNB), or gNB.

The "UE" is an entity communicating with a BS and may be referred to as UE, device, mobile station (MS), mobile equipment (ME), or terminal.

CA/Multi-connectivity in fifth generation wireless communication system: The fifth generation wireless communication system, supports standalone mode of operation as well dual connectivity (DC). In DC a multiple Rx/Tx UE may be configured to utilize resources provided by two different nodes (or NBs) connected via non-ideal backhaul. One node acts as the Master Node (MN) and the other as the Secondary Node (SN). The MN and SN are connected via a network interface and at least the MN is connected to the core network. NR also supports Multi-RAT Dual Connectivity (MR-DC) operation whereby a UE in RRC_CONNECTED is configured to utilize radio resources provided by two distinct schedulers, located in two different nodes connected via a non-ideal backhaul and providing either E-UTRA (i.e. if the node is an ng-eNB) or NR access (i.e. if the node is a gNB). In NR for a UE in RRC_CONNECTED not configured with CA/DC there is only one serving cell comprising of the primary cell. For a UE in RRC _CONNECTED configured with CA/ DC the term 'serving cells' is used to denote the set of cells comprising of the Special Cell(s) and all secondary cells. In NR the term Master Cell Group (MCG) refers to a group of serving cells associated with the Master Node, comprising of the PCell and optionally one or more SCells. In NR the term Secondary Cell Group (SCG) refers to a group of serving cells associated with the Secondary Node, comprising of the PSCell and optionally one or more SCells. In NR PCell (primary cell) refers to a serving cell in MCG, operating on the primary frequency, in which the UE either performs the initial connection establishment procedure or initiates the connection re-establishment procedure. In NR for a UE configured with CA, Scell is a cell providing additional radio resources on top of Special Cell. Primary SCG Cell (PSCell) refers to a serving cell in SCG in which the UE performs random access when performing the Reconfiguration with Sync procedure. For Dual Connectivity operation the term SpCell (i.e. Special Cell) refers to the PCell of the MCG or the PSCell of the SCG, otherwise the term Special Cell refers to the PCell.

Random access in fifth generation wireless communication system: In the 5G wireless communication system, random access (RA) is supported. Random access (RA) is used to achieve uplink (UL) time synchronization. RA is used during initial access, handover, radio resource control (RRC) connection re-establishment procedure, scheduling request transmission, secondary cell group (SCG) addition/modification, beam failure recovery and data or control information transmission in UL by non-synchronized UE in RRC CONNECTED state. Several types of random access procedure is supported such as contention based random access, contention free random access and each of these can be one 2 step or 4 step random access.

BWP operation in fifth generation wireless communication system: In the fifth generation wireless communication system bandwidth adaptation (BA) is supported. With BA, the receive and transmit bandwidth of a UE need not be as large as the bandwidth of the cell and can be adjusted: the width can be ordered to change (e.g., to shrink during a period of low activity to save power); the location can move in the frequency domain (e.g., to increase scheduling flexibility); and the subcarrier spacing can be ordered to change (e.g., to allow different services). A subset of the total cell bandwidth of a cell is referred to as a Bandwidth Part (BWP). BA is achieved by configuring RRC connected UE with BWP(s) and telling the UE which of the configured BWPs is currently the active one. When BA is configured, the UE only has to monitor PDCCH on the one active BWP i.e., it does not have to monitor PDCCH on the entire DL frequency of the serving cell. In the RRC connected state, the UE is configured with one or more DL and UL BWPs, for each configured Serving Cell (i.e., PCell or Scell). For an activated Serving Cell, there is always one active UL and DL BWP at any point in time. The BWP switching for a Serving Cell is used to activate an inactive BWP and deactivate an active BWP at a time. The BWP switching is controlled by the PDCCH indicating a downlink assignment or an uplink grant, by the bwp-InactivityTimer, by RRC signaling, or by the MAC entity itself upon initiation of a Random Access procedure. Upon addition of an SpCell or activation of an Scell, the DL BWP and UL BWP indicated by firstActiveDownlinkBWP-Id and firstActiveUplinkBWP-Id respectively is active without receiving the PDCCH indicating a downlink assignment or an uplink grant. The active BWP for a Serving Cell is indicated by either the RRC or the PDCCH. For unpaired spectrum, a DL BWP is paired with a UL BWP, and BWP switching is common for both UL and DL. Upon expiry of the BWP inactivity timer the UE switch from the active DL BWP to the default DL BWP or initial DL BWP (if default DL BWP is not configured).

In the fifth generation wireless communication system, RRC can be in one of the following states: RRC IDLE, RRC_INACTIVE, and RRC_CONNECTED. A UE is either in the RRC _CONNECTED state or in the RRC INACTIVE state when an RRC connection has been established. If this is not the case, i.e., no RRC connection is established, the UE is in the RRC IDLE state. The RRC states can further be characterized as follows:

In the RRC_IDLE, a UE specific discontinuous (DRX) may be configured by upper layers. The UE monitors Short Messages transmitted with paging RNTI (P-RNTI) over DCI; monitors a Paging channel for CN paging using 5G-S-temoprary mobile subscriber identity (5G-S-TMSI); performs neighboring cell measurements and cell (re-)selection; acquires system information and can send SI request (if configured); performs logging of available measurements together with location and time for logged measurement configured UEs.

In the RRC _INACTIVE, a UE specific DRX may be configured by upper layers or by RRC layer; UE stores the UE Inactive AS context; a RAN-based notification area is configured by the RRC layer. The UE monitors Short Messages transmitted with P-RNTI over DCI; monitors a Paging channel for CN paging using 5G-S-TMSI and RAN paging using fullI-RNTI; performs neighboring cell measurements and cell (re-)selection; performs RAN-based notification area updates periodically and when moving outside the configured RAN-based notification area; acquires system information and can send an SI request (if configured); performs logging of available measurements together with location and time for logged measurement configured UEs.

In the RRC _CONNECTED, the UE stores the AS context and transfer of unicast data to/from UE takes place. The UE monitors Short Messages transmitted with P-RNTI over DCI, if configured; monitors control channels associated with the shared data channel to determine if data is scheduled for it; provides channel quality and feedback information; performs neighboring cell measurements and measurement reporting; acquires system information.

PDCCH in fifth generation wireless communication system: In the fifth generation wireless communication system, Physical Downlink Control Channel (PDCCH) is used to schedule DL transmissions on PDSCH and UL transmissions on PUSCH, where the Downlink Control Information (DCI) on PDCCH includes: Downlink assignments containing at least modulation and coding format, resource allocation, and hybrid-ARQ information related to DL-SCH; Uplink scheduling grants containing at least modulation and coding format, resource allocation, and hybrid-ARQ information related to UL-SCH. In addition to scheduling, PDCCH can be used to for: Activation and deactivation of configured PUSCH transmission with configured grant; Activation and deactivation of PDSCH semi-persistent transmission; Notifying one or more UEs of the slot format; Notifying one or more UEs of the PRB(s) and OFDM symbol(s) where the UE may assume no transmission is intended for the UE; Transmission of TPC commands for PUCCH and PUSCH; Transmission of one or more TPC commands for SRS transmissions by one or more UEs; Switching a UE's active bandwidth part; Initiating a random access procedure. A UE monitors a set of PDCCH candidates in the configured monitoring occasions in one or more configured Control Resource SETs (CORESETs) according to the corresponding search space configurations. A CORESET consists of a set of PRBs with a time duration of 1 to 3 OFDM symbols. The resource units Resource Element Groups (REGs) and Control Channel Elements (CCEs) are defined within a CORESET with each CCE consisting a set of REGs. Control channels are formed by aggregation of CCE. Different code rates for the control channels are realized by aggregating different number of CCE. Interleaved and non-interleaved CCE-to-REG mapping are supported in a CORESET. Polar coding is used for PDCCH. Each resource element group carrying PDCCH carries its own DMRS. QPSK modulation is used for PDCCH.

In the fifth generation wireless communication system, a list of search space configurations is signaled by the gNB for each configured BWP of serving cell wherein each search configuration is uniquely identified by a search space identifier. Search space identifier is unique amongst the BWPs of a serving cell. Identifier of search space configuration to be used for specific purpose such as paging reception, SI reception, random access response reception is explicitly signaled by the gNB for each configured BWP. In NR search space configuration comprises of parameters Monitoring-periodicity-PDCCH-slot, Monitoring-offset-PDCCH-slot, Monitoring-symbols-PDCCH-within-slot and duration. A UE determines PDCCH monitoring occasion(s) within a slot using the parameters PDCCH monitoring periodicity (Monitoring-periodicity-PDCCH-slot), the PDCCH monitoring offset (Monitoring-offset-PDCCH-slot), and the PDCCH monitoring pattern (Monitoring-symbols-PDCCH-within-slot). PDCCH monitoring occasions are there in slots 'x' to x+duration where the slot with number 'x' in a radio frame with number 'y' satisfies the equation below:

(y^{∗}(number of slots in a radio frame) + x - Monitoring-offset-PDCCH-slot) mod (Monitoring-periodicity-PDCCH-slot) = 0;

The starting symbol of a PDCCH monitoring occasion in each slot having PDCCH monitoring occasion is given by Monitoring-symbols-PDCCH-within-slot. The length (in symbols) of a PDCCH monitoring occasion is given in the coreset associated with the search space. Search space configuration includes the identifier of coreset configuration associated with it. A list of coreset configurations are signaled by the gNB for each configured BWP of serving cell wherein each coreset configuration is uniquely identified by an coreset identifier. Coreset identifier is unique amongst the BWPs of a serving cell. Note that each radio frame is of 10ms duration. Radio frame is identified by a radio frame number or system frame number. Each radio frame comprises of several slots wherein the number of slots in a radio frame and duration of slots depends on sub carrier spacing. The number of slots in a radio frame and duration of slots depends radio frame for each supported SCS is pre-defined in NR. Each coreset configuration is associated with a list of TCI (Transmission configuration indicator) states. One DL RS ID (SSB or CSI RS) is configured per TCI state. The list of TCI states corresponding to a coreset configuration is signaled by the gNB via RRC signaling. One of the TCI state in TCI state list is activated and indicated to UE by the gNB. TCI state indicates the DL TX beam (DL TX beam is QCLed with SSB/CSI RS of TCI state) used by the gNB for transmission of PDCCH in the PDCCH monitoring occasions of a search space.

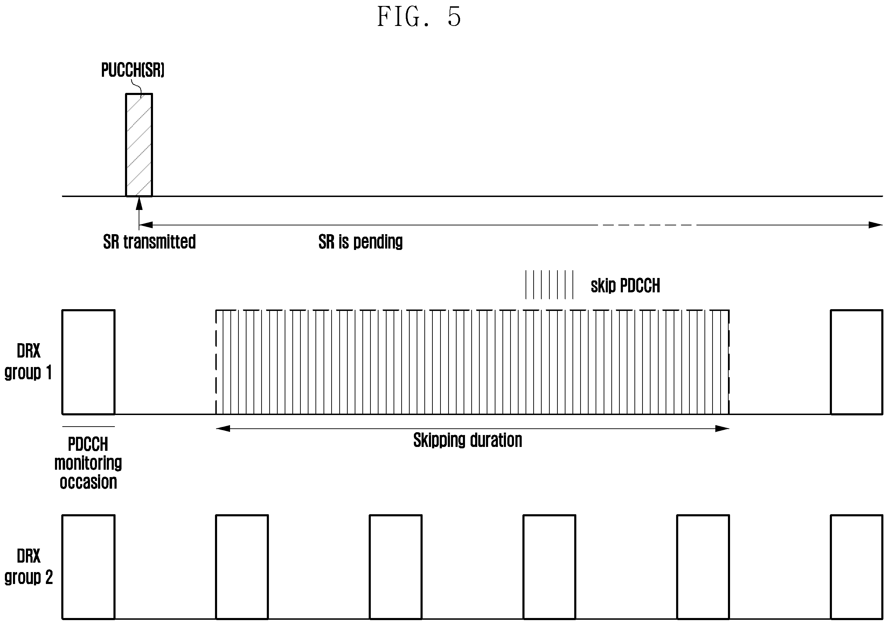

In 5G wireless communication system, the PDCCH monitoring activity of the UE in RRC connected mode is governed by DRX. When DRX is configured, the UE does not have to continuously monitor PDCCH. DRX is characterized by the following:
- on-duration: duration that the UE waits for, after waking up, to receive PDCCHs. If the UE successfully decodes a PDCCH, the UE stays awake and starts the inactivity timer;
- inactivity-timer: duration that the UE waits to successfully decode a PDCCH, from the last successful decoding of a PDCCH, failing which it can go back to sleep. The UE shall restart the inactivity timer following a single successful decoding of a PDCCH for a first transmission only (i.e. not for retransmissions);
- retransmission-timer: duration until a retransmission can be expected;
- cycle: specifies the periodic repetition of the on-duration followed by a possible period of inactivity (see FIG. 5 below);
- active-time: total duration that the UE monitors PDCCH. This includes the "on-duration" of the DRX cycle, the time UE is performing continuous reception while the inactivity timer has not expired, and the time when the UE is performing continuous reception while waiting for a retransmission opportunity.

In the RRC_CONNECTED serving cells of a MAC entity may be configured by RRC in two DRX groups with separate DRX parameters. Note that MAC entity is per cell group (CG). When RRC does not configure a secondary DRX group in a CG, there is only one DRX group in that CG and all Serving Cells of that belong to that one DRX group. When two DRX groups are configured in a CG, each Serving Cell of CG is uniquely assigned to either of the two groups. DRX Parameters are categorized into group specific parameters and common parameters. The group specific parameters consist of drx-onDurationTimer and drx-InactivityTimer. The common parameters consist of drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL.

FIG. 1 illustrates an example of PDCCH skipping.

There have been various studies on optimizing physical downlink control channel (PDCCH) monitoring in 5G communication system recently. PDCCH skipping as illustrated in FIG. 1 can be applied by UE for PDCCH monitoring in RRC _CONNECTED state. FIG. 1 illustrates normal PDCCH monitoring where UE monitors all the configured PDCCH monitoring occasions, and illustrates PDCCH skipping indicated by scheduling downlink control information (DCI). The scheduling DCI is the DCI which indicates scheduled downlink (DL) or uplink (UL) resources. Skipping duration can be indicated by RRC message or can be indicated by DCI or can be pre-defined. Upon receiving PDCCH skipping indication via a PDCCH (110), UE skips PDCCH monitoring during the skipping duration (120).

Search space set group (SSSG) switching for PDCCH skipping can also be applied by UE for PDCCH monitoring in RRC_CONNECTED state. UE can be switched to an'empty' SSSG, i.e. no search space (SS) set(s) is configured for this SSSG. So, UE does not monitoring PDCCH when UE switches to it.

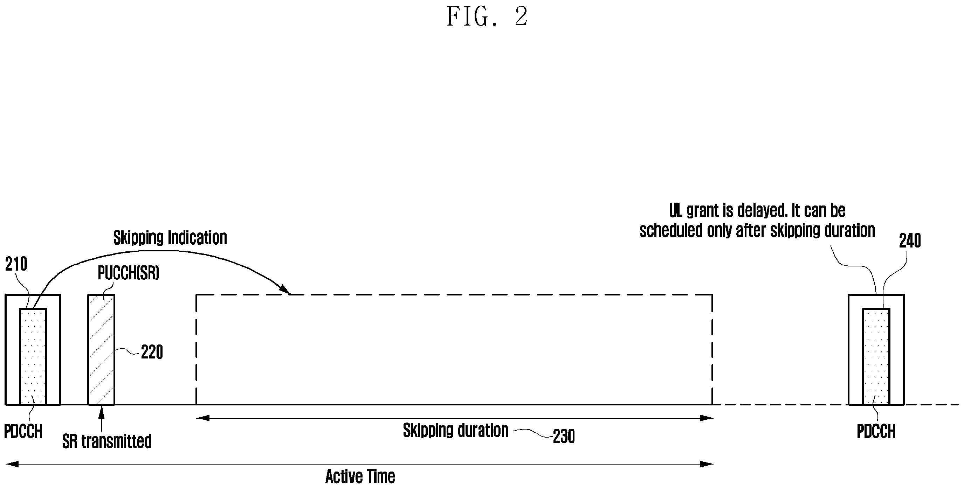

FIG. 2 illustrates an example of a delayed UL grant due to a PDCCH skipping duration.

If the UE has received PDCCH skipping indication via a PDCCH (210) and scheduling request (SR) is triggered for buffer status report (BSR) or beam failure recovery (BFR) or consistent listen-before-talk (LBT) failure and the SR is transmitted over physical uplink control channel (PUCCH) (220), UL grant (scheduled by PDCCH) (240) is delayed due to skipping duration (230) as illustrated in FIG. 2.

The present disclosure disclosed method and apparatus for solving the above-described problems.

### Method 1

UE is in RRC _CONNECTED state.

UE monitors PDCCH in the active DL bandwidth part (BWP) of special cell (SpCell) and active DL BWP(s) of activated Secondary cell(s). The PDCCH is monitored in PDCCH monitoring occasions configured by one or more search space configurations of active DL BWP

UE receives PDCCH from a serving cell wherein the DCI includes/indicates PDCCH skipping. In an embodiment, in the RRC_CONNECTED state, UE may indicate to next generation node B (gNodeB, gNB) using dedicated RRC message whether the UE supports PDCCH skipping. Only if the gNB has received indication from UE that the UE supports PDCCH skipping, the gNB may send the PDCCH skipping indication in the DCI.

In the RRC _CONNECTED state, Scheduling Request (SR) is used for requesting uplink shared channel (UL-SCH) resources for new transmission. The medium access control (MAC) entity (or CG) may be configured with zero, one, or more SR configurations. MAC entity is separate for each CG, i.e., master cell group (MCG) and secondary cell group (SCG). An SR configuration consists of a set of PUCCH resources for SR across different BWPs and cells. For a logical channel or for secondary cell (Scell) beam failure recovery and for consistent LBT failure recovery, at most one PUCCH resource for SR is configured per BWP. Each SR configuration corresponds to one or more logical channels and/or to Scell beam failure recovery and/or to consistent LBT failure recovery. Each logical channel, Scell beam failure recovery, and consistent LBT failure recovery, may be mapped to zero or one SR configuration, which is configured by RRC. The SR configuration of the logical channel that triggered a BSR or the SR configuration of the Scell beam failure recovery or the SR configuration of the beam failure recovery of BFD-RS set (TRP) of cell or the SR configuration of the consistent LBT failure recovery (if such a configuration exists) is considered as corresponding SR configuration for the triggered SR.

When an SR is triggered, it shall be considered as pending until it is canceled.
- All pending SR(s) for BSR triggered prior to the MAC protocol packet unit (PDU) assembly shall be canceled and each respective sr-ProhibitTimer shall be stopped when the MAC PDU is transmitted and this PDU includes a Long or Short BSR MAC control element (CE) which contains buffer status up to (and including) the last event that triggered a BSR prior to the MAC PDU assembly. All pending SR(s) for BSR triggered according to the BSR procedure shall be canceled and each respective sr-ProhibitTimer shall be stopped when the UL grant(s) can accommodate all pending data available for transmission.

If this SR was triggered by beam failure recovery of an Scell and a MAC PDU is transmitted and this PDU includes a BFR MAC CE or a Truncated BFR MAC CE which contains beam failure recovery information for this Scell; or if this SR was triggered by beam failure recovery of an Scell and this Scell is deactivated; or if this SR was triggered by consistent LBT failure recovery of an Scell and a MAC PDU is transmitted and the MAC PDU includes an LBT failure MAC CE that indicates consistent LBT failure for this Scell; or if this SR was triggered by consistent LBT failure recovery of an Scell and all the triggered consistent LBT failure(s) for this Scell are canceled: a UE may cancel the pending SR and stop the corresponding sr-ProhibitTimer, if running.

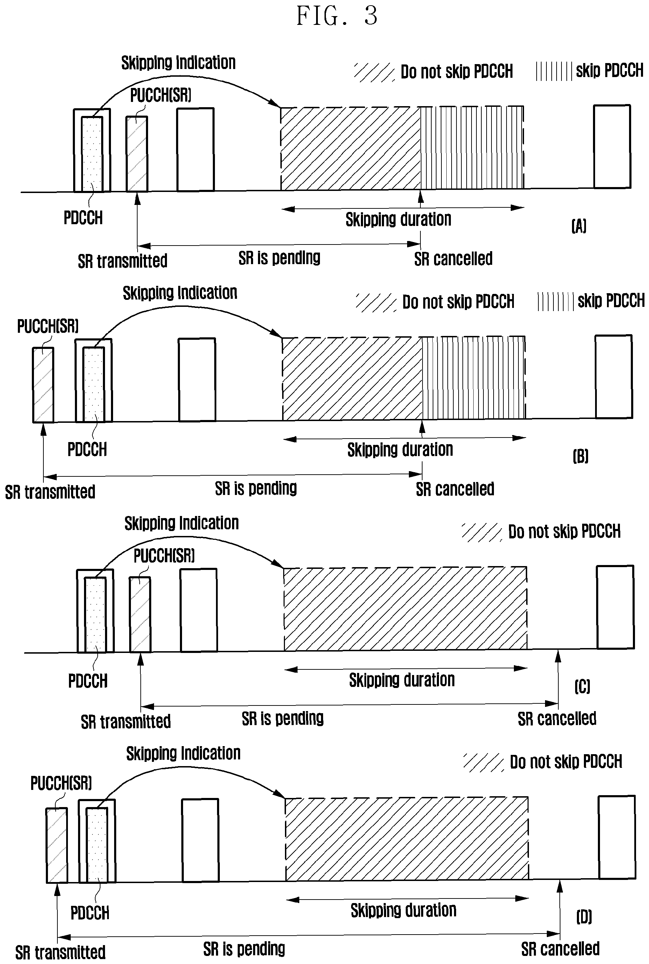

FIG. 3 illustrates an example of PDCCH skipping when an SR is transmitted and is pending in accordance with an embodiment of the disclosure.

In this method of this disclosure, if scheduling request is transmitted on PUCCH and is pending at the time when the PDCCH skipping indication is received; or if scheduling request is transmitted on PUCCH and is pending during the PDCCH skipping duration (PDCCH skipping indication may be received before or after the scheduling request is transmitted on PUCCH), UE perform the following operation; and if SR is received and is pending (i.e., UL grant for new transmission is not sent by the gNB to the UE) during the PDCCH skipping duration, the gNB performs the following operation:
^{∗} Option 1: PDCCH skipping is canceled or suspended or ignored by the UE and the gNB cancels or suspends or ignores the PDCCH skipping for the UE on all serving cells of the CG during the PDCCH skipping duration while the scheduling request is pending. In other words, the PDCCH skipping is canceled or suspended or ignored on all serving cells of the CG in the portion/part of the PDCCH skipping duration which overlaps with pending SR duration. The portion/part may be the completed PDCCH skipping duration. The portion/part of the PDCCH skipping duration which does not overlap with the pending SR duration, UE/gNB does not cancel or suspend or ignore PDCCH skipping. Here the CG is the cell group of the cell whose PUCCH resources are used by the UE for transmitting a scheduling request. It is to be noted that the PDCCH skipping duration can be different in different cells of the CG, a PDCCH skipping duration of zero or more cells of the CG can occur while the scheduling request is pending for the CG, so 'the PDCCH skipping is canceled or suspended or ignored by the UE on all serving cells of the CG' may mean the PDCCH skipping is canceled or suspended or ignored by the UE on those serving cell(s) of the CG for which the skipping duration (as indicated by the skipping indication) occurs while the SR is pending.
^{∗} Option 2: Amongst all serving cells of CG, PDCCH. Skipping is canceled or suspended or ignored by the UE and the gNB cancels or suspends PDCCH skipping for the UE, on specific serving cell(s) during the PDCCH skipping duration while the scheduling request is pending. In other words, PDCCH skipping is canceled or suspended on a specific serving cell(s) in the portion of PDCCH skipping duration which overlaps with pending SR duration. Here CG is the cell group of the cell whose PUCCH resources are used by UE for transmitting scheduling request.
   ^{∗∗} Specific serving cell can be SpCell of the CG Here CG is the cell group of the cell whose PUCCH resources are used by UE for transmitting scheduling request.
   ^{∗∗} Specific serving cell can be the serving cell on which UE has transmitted scheduling request.
   ^{∗∗} Specific serving cell can be the serving cell on which PUCCH resources are configured.
   ^{∗∗} Specific serving cell(s) can be signaled by the gNB (in DCI/RRC).
^{∗} Option 3: UE stops the SR prohibit timer corresponding to pending SR (i.e. SR prohibit timer of SR configuration corresponding to pending SR).

In an embodiment, in the above description, PDCCH indicating UE to switch to an empty SSSG (i.e. SSSG not configured with any search space sets) or default SSSG is also considered as PDCCH skipping indication. Skipping duration can be defined by a timer in this case or it can be the time duration until UE receives PDCCH indicating UE to switch to a non-empty SSSG or non-default SSSG.

In an embodiment, the above operation can also be applied in RRC_INACTIVE and/or RRC_IDLE, for example UE may receive the PDCCH skipping indication during the small data transmission (SDT) procedure in RRC _INACTIVE and SR can be triggered and transmitted in RRC_INACTIVE state. The PDCCH skipping indication can be indicated in wakeup signal or early paging indication or in random access response (RAR) or message B (MsgB) in RRC_INACTIVE and/or RRC IDLE. In an embodiment, for small data transmission procedure in RRC_INACTIVE or in RRC IDLE state, if RA is initiated for SDT, PDCCH skipping indication can be sent by the gNB in between message 4 (Msg4) (including contention resolution identity MAC CE) transmission or MsgB including contention resolution identity transmission and RRC Release message transmission. In an embodiment, for small data transmission procedure in RRC INACTIVE state or in RRC_IDLE state, if random access (RA) is initiated for SDT, PDCCH skipping indication can be sent by the gNB after the successful completion of random access procedure.

### Method 2

UE is in RRC_CONNECTED state.

UE monitors PDCCH in the active DL BWP of SpCell and active DL BWP(s) of activated Secondary cell(s). The PDCCH is monitored in PDCCH monitoring occasions configured by one or more search space configurations of active DL BWP

UE receives PDCCH from a serving cell wherein the DCI includes/indicates PDCCH skipping. In an embodiment, in the RRC _CONNECTED state, the UE may indicate to the gNB using dedicated RRC message whether the UE supports PDCCH skipping. Only if the gNB has received indication from the UE that the UE supports PDCCH skipping, the gNB sends the PDCCH skipping indication in the DCI.

In the RRC CONNECTED state, Scheduling Request (SR) is used for requesting UL-SCH resources for new transmission. The MAC entity (or CG) may be configured with zero, one, or more SR configurations. The MAC entity is separate for each CG i.e., MCG and SCG. An SR configuration consists of a set of PUCCH resources for SR across different BWPs and cells. For a logical channel or for Scell beam failure recovery and for consistent LBT failure recovery, at most one PUCCH resource for SR is configured per BWP. Each SR configuration corresponds to one or more logical channels and/or to Scell beam failure recovery and/or to consistent LBT failure recovery. Each logical channel, Scell beam failure recovery, and consistent LBT failure recovery, may be mapped to zero or one SR configuration, which is configured by the RRC. The SR configuration of the logical channel that triggered a BSR or the SR configuration of the Scell beam failure recovery or the SR configuration of the beam failure recovery of the BFD-RS set (TRP) of the cell or the SR configuration of the consistent LBT failure recovery (if such a configuration exists) is considered as corresponding SR configuration for the triggered SR.

When an SR is triggered, it shall be considered as pending until it is canceled.
- All pending SR(s) for BSR triggered prior to the MAC PDU assembly shall be canceled and each respective sr-ProhibitTimer shall be stopped when the MAC PDU is transmitted and this PDU includes a Long or Short BSR MAC CE which contains buffer status up to (and including) the last event that triggered a BSR prior to the MAC PDU assembly. All pending SR(s) for BSR triggered according to the BSR procedure shall be canceled and each respective sr-ProhibitTimer shall be stopped when the UL grant(s) can accommodate all pending data available for transmission.
- If this SR was triggered by beam failure recovery of an Scell and a MAC PDU is transmitted and this PDU includes a BFR MAC CE or a Truncated BFR MAC CE which contains beam failure recovery information for this Scell; or if this SR was triggered by beam failure recovery of an Scell and this Scell is deactivated; or if this SR was triggered by consistent LBT failure recovery of an Scell and a MAC PDU is transmitted and the MAC PDU includes an LBT failure MAC CE that indicates consistent LBT failure for this Scell; or if this SR was triggered by consistent LBT failure recovery of an Scell and all the triggered consistent LBT failure(s) for this Scell are canceled: a UE may cancel the pending SR and stop the corresponding sr-ProhibitTimer, if running.

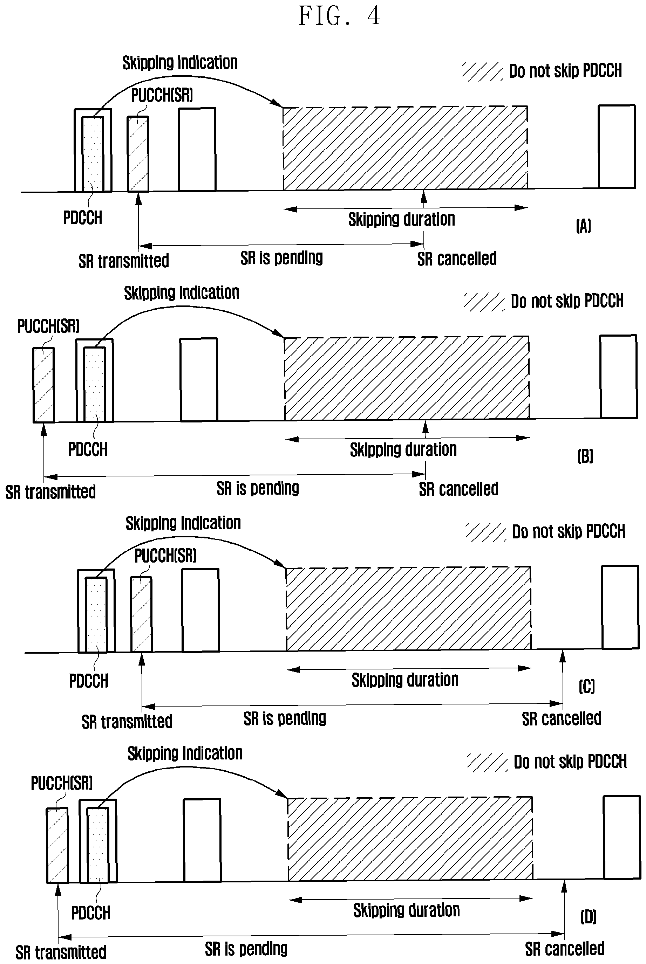

FIG. 4 illustrates an example of PDCCH skipping when an SR is transmitted and is pending in accordance with an embodiment of the disclosure.

In this method of this disclosure, if the scheduling request is transmitted on the PUCCH and is pending at the time when the PDCCH skipping indication is received; or if the scheduling request is transmitted on the PUCCH and is pending during the PDCCH skipping duration, the UE performs the following operation; and if the SR is received and is pending (i.e., an UL grant for new transmission is not sent) during the PDCCH skipping duration, the gNB performs the following operation:
^{∗} Option 1: PDCCH skipping is canceled or suspended or ignored and the gNB cancels or suspends or ignores PDCCH skipping for the UE, on all serving cells of the CG during the PDCCH skipping duration. In other words, PDCCH skipping is canceled or suspended or ignored on all serving cells of the CG in the PDCCH skipping duration. In other words, PDCCH skipping is canceled or suspended or ignored on all serving cells of the CG during the PDCCH skipping duration if a portion/part of or entire PDCCH skipping duration overlaps with the pending SR duration. Here the CG is the cell group of the cell whose PUCCH resources are used by the UE for transmitting the scheduling request. It is to be noted that the PDCCH skipping duration can be different in different cells of CG, a PDCCH skipping duration of zero or more cells of the CG can occur while the scheduling request is pending for the CG, so 'PDCCH skipping is canceled or suspended or ignored by the UE on all serving cells of the CG' may mean PDCCH skipping is canceled or suspended or ignored by the UE on those serving cell(s) of the CG for which skipping duration (as indicated by the skipping indication) occurs while the SR is pending.
^{∗} Option 2: Amongst all serving cells of the CG, PDCCH skipping is canceled or suspended or ignored by the UE and the gNB cancels or suspends or ignores PDCCH skipping for the UE, on a specific serving cell(s) during the PDCCH skipping duration. In other words, PDCCH skipping is canceled or suspended on a specific serving cell(s) in the PDCCH skipping duration. In other words, PDCCH skipping is canceled or suspended or ignored on specific serving cell(s) of the CG during the PDCCH skipping duration if a portion/part of or entire PDCCH skipping duration overlaps with the pending SR duration. Here the CG is the cell group of the cell whose PUCCH resources are used by UE for transmitting scheduling request.
   ^{∗∗} Specific serving cell can be the SpCell of the CG. Here the CG is the cell group of the cell whose PUCCH resources are used by the UE for transmitting the scheduling request.
   ^{∗∗} Specific serving cell can be the serving cell on which the UE has transmitted the scheduling request.
   ^{∗∗} Specific serving cell can be the serving cell on which PUCCH resources are configured.
   ^{∗∗} Specific serving cell(s) can be signaled by the gNB (in DCI/RRC).

In an embodiment, in the above description, the PDCCH indicating the UE to switch to an empty SSSG (i.e., SSSG not configured with any search space sets) or default SSSG is also considered as a PDCCH skipping indication. Skipping duration can be defined by a timer in this case or it can be the time duration until the UE receives the PDCCH indicating the UE to switch to a non-empty SSSG or non-default SSSG.

In an embodiment, the above operation can also be applied in the RRC_INACTIVE and/or RRC_IDLE, for example the UE may receive the the PDCCH skipping indication during the small data transmission procedure in the RRC_INACTIVE and the SR can be triggered and transmitted in the RRC _INACTIVE state. The PDCCH skipping indication can be indicated in the wakeup signal or early paging indication or in RAR or MsgB in the RRC _INACTIVE and/or RRC_IDLE. In an embodiment, for small data transmission procedure in the RRC INACTIVE or in the RRC_IDLE state, if RA is initiated for SDT, the PDCCH skipping indication can be sent by the gNB in between Msg4 (including contention resolution identity MAC CE) transmission or MsgB including contention resolution identity transmission and RRC Release message transmission. In an embodiment, for small data transmission procedure in the RRC INACTIVE state or in the RRC IDLE state, if RA is initiated for SDT, the PDCCH skipping indication can be sent by the gNB after the successful completion of the random access procedure.

### Method 3

UE is in the RRC_CONNECTED state.

The UE monitors the PDCCH in the active DL BWP of the SpCell and active DL BWP(s) of activated Secondary cell(s). The PDCCH is monitored in the PDCCH monitoring occasions configured by one or more search space configurations of active DL BWP

The UE receives the PDCCH from a serving cell wherein the DCI includes/indicates PDCCH skipping. In an embodiment, in the RRC _CONNECTED state, the UE may indicate to the gNB using a dedicated RRC message whether the UE supports PDCCH skipping. Only if the gNB has received an indication from the UE that the UE supports PDCCH skipping, the gNB sends the PDCCH skipping indication in the DCI.

In the RRC_CONNECTED state, Scheduling Request (SR) is used for requesting UL-SCH resources for new transmission. The MAC entity (or CG) may be configured with zero, one, or more SR configurations. The MAC entity is separate for each CG i.e., MCG and SCG. An SR configuration consists of a set of PUCCH resources for the SR across different BWPs and cells. For a logical channel or for Scell beam failure recovery and for consistent LBT failure recovery, at most one PUCCH resource for the SR is configured per BWP. Each SR configuration corresponds to one or more logical channels and/or to Scell beam failure recovery and/or to consistent LBT failure recovery. Each logical channel, Scell beam failure recovery, and consistent LBT failure recovery, may be mapped to zero or one SR configuration, which is configured by the RRC. The SR configuration of the logical channel that triggered a BSR or the SR configuration of the Scell beam failure recovery or the SR configuration of the beam failure recovery of the BFD-RS set (TRP) of the cell or the SR configuration of the consistent LBT failure recovery (if such a configuration exists) is considered as corresponding SR configuration for the triggered SR.

When an SR is triggered, it shall be considered as pending until it is canceled.
- All pending SR(s) for BSR triggered prior to the MAC PDU assembly shall be canceled and each respective sr-ProhibitTimer shall be stopped when the MAC PDU is transmitted and this PDU includes a Long or Short BSR MAC CE which contains buffer status up to (and including) the last event that triggered a BSR prior to the MAC PDU assembly. All pending SR(s) for the BSR triggered according to the BSR procedure shall be canceled and each respective sr-ProhibitTimer shall be stopped when the UL grant(s) can accommodate all pending data available for transmission.
- If this SR was triggered by beam failure recovery of an Scell and a MAC PDU is transmitted and this PDU includes a BFR MAC CE or a Truncated BFR MAC CE which contains beam failure recovery information for this Scell; or if this SR was triggered by beam failure recovery of an Scell and this Scell is deactivated; or if this SR was triggered by consistent LBT failure recovery of an Scell and a MAC PDU is transmitted and the MAC PDU includes an LBT failure MAC CE that indicates consistent LBT failure for this Scell; or if this SR was triggered by consistent LBT failure recovery of an Scell and all the triggered consistent LBT failure(s) for this Scell are canceled: a UE may cancel the pending SR and stop the corresponding sr-ProhibitTimer, if running.

FIG. 5 illustrates an example of PDCCH skipping for a DRX group when an SR is transmitted and is pending in accordance with an embodiment of the disclosure.

In this method of this disclosure, it is assumed that the PDCCH skipping indication is for a discontinuous reception (DRX) group. If the PDCCH skipping indication is received from a serving cell for a DRX group, PDCCH skipping is applied during the PDCCH skipping duration for all serving cells (SpCell and active secondary serving cells) of that DRX group.

If the PDCCH skipping duration for a DRX group does not occur while SR is transmitted and is pending, UE continues PDCCH skipping for the other DRX group. Referring the FIG. 5, the SR is pending during the skipping duration in DRX group 1. As there is no skipping indicated for the DRX group 2 while the SR is pending, the UE and the gNB do not cancel or suspend skipping in DRX group 1. If the PDCCH skipping duration for a DRX group does not occur while the SR is received and is pending (i.e., UL grant for new transmission is not sent), the gNB continues the PDCCH skipping for the other DRX group if the PDCCH skipping is indicated for the other DRX group.

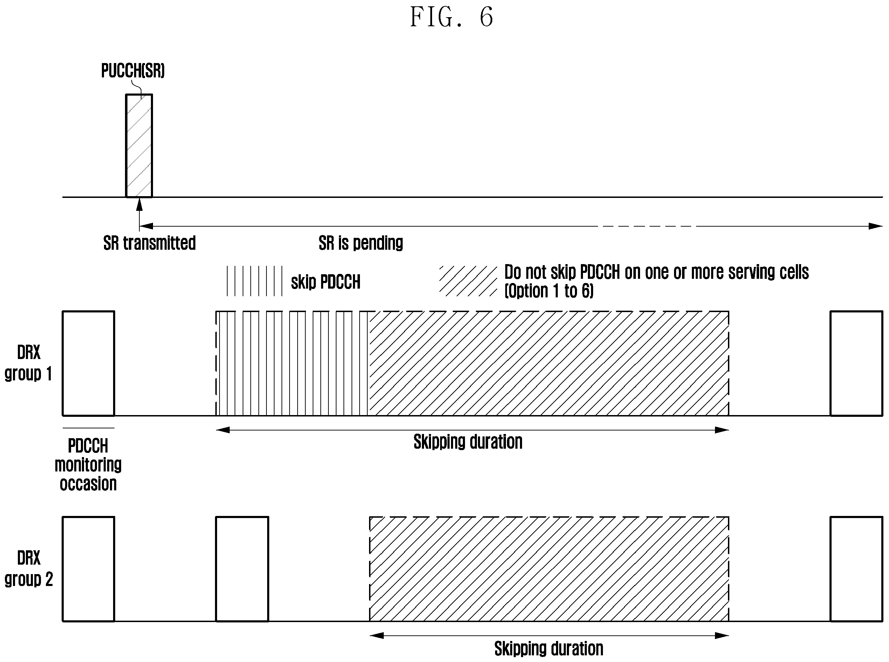

FIG. 6 illustrates an example of PDCCH skipping for DRX groups when an SR is transmitted and is pending in accordance with an embodiment of the disclosure.

In this method of this disclosure it is assumed that the PDCCH skipping indication is for the DRX group. If the PDCCH skipping indication is received from a serving cell for a DRX group, PDCCH skipping is applied during the PDCCH skipping duration for all serving cells (SpCell and active secondary serving cells) of that DRX group.

If the PDCCH skipping duration for both DRX groups occurs while the SR is pending after transmitting the SR on the PUCCH, during the time duration of skipping which is common between both DRX groups while the SR is pending, the UE and the gNB will cancel or suspend or ignore PDCCH skipping in one or more serving cells using one of the options listed below. Referring the FIG. 6, the SR is pending during the skipping duration in DRX group 1 and DRX group 2. During the time duration of skipping which is common between both DRX groups while the SR is pending, the UE and the gNB will cancel or suspend PDCCH skipping in one or more serving cells as per option 1 to option 6 described below.

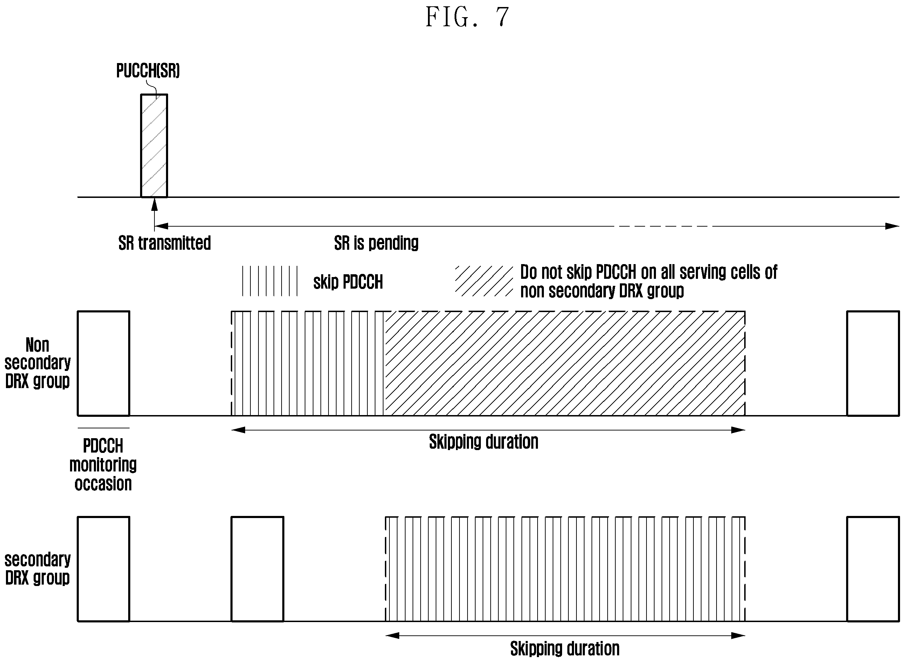

FIG. 7 illustrates an example of Option 1 for PDCCH skipping for DRX groups when an SR is transmitted and is pending in accordance with an embodiment of the disclosure.
^{∗} Option 1: the UE cancels or suspends or ignores PDCCH skipping and the gNB cancels or suspends or ignores the PDCCH skipping for the UE, on all serving cells of the non-secondary DRX group of the CG during the PDCCH skipping duration (while the scheduling request is pending). Referring the FIG. 7, the SR is pending during the skipping duration in DRX group 1 and DRX group 2. The time duration where the skipping duration is common between both DRX groups while the SR is pending, the UE will cancel or suspend or ignore PDCCH skipping and the gNB cancels or suspends or ignores the PDCCH skipping for the UE, in serving cells of non-secondary DRX group as per option 1.

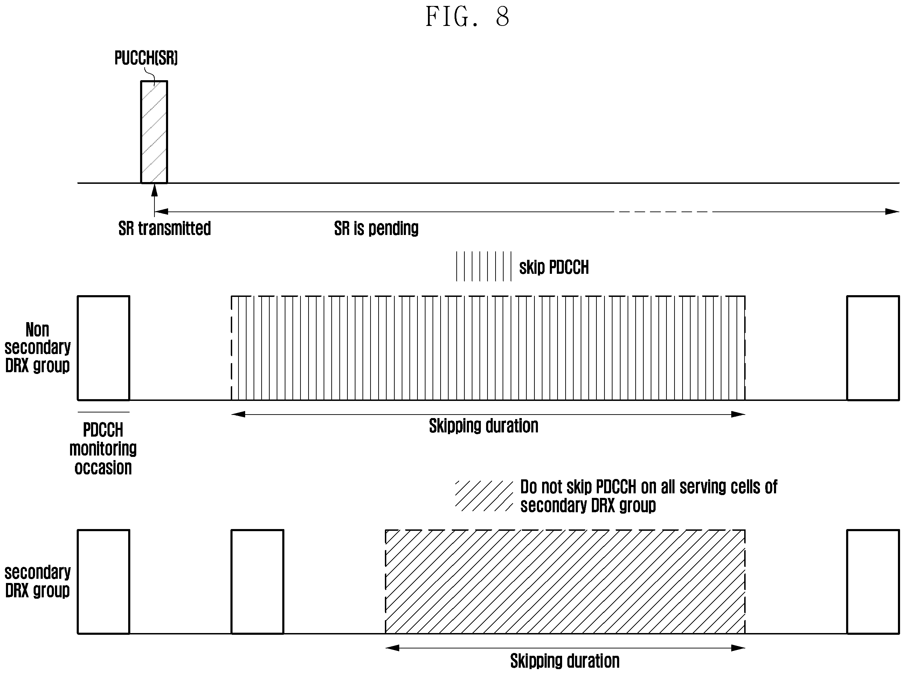

   FIG. 8 illustrates an example of Option 2 for PDCCH skipping for DRX groups when an SR is transmitted and is pending in accordance with an embodiment of the disclosure.
^{∗} Option 2: the UE cancels or suspends or ignores PDCCH skipping and the gNB cancels or suspends or ignores PDCCH skipping for the UE, on all serving cells of the secondary DRX group of the CG during the PDCCH skipping duration (while the scheduling request is pending). Referring the FIG. 8, the SR is pending during the skipping duration in DRX group 1 and DRX group 2. The time duration where the skipping duration is common between both DRX groups while the SR is pending, the UE will cancel or suspend or ignore PDCCH skipping and the gNB cancels or suspends or ignores PDCCH skipping for the UE in serving cells of secondary DRX group as per option 2.

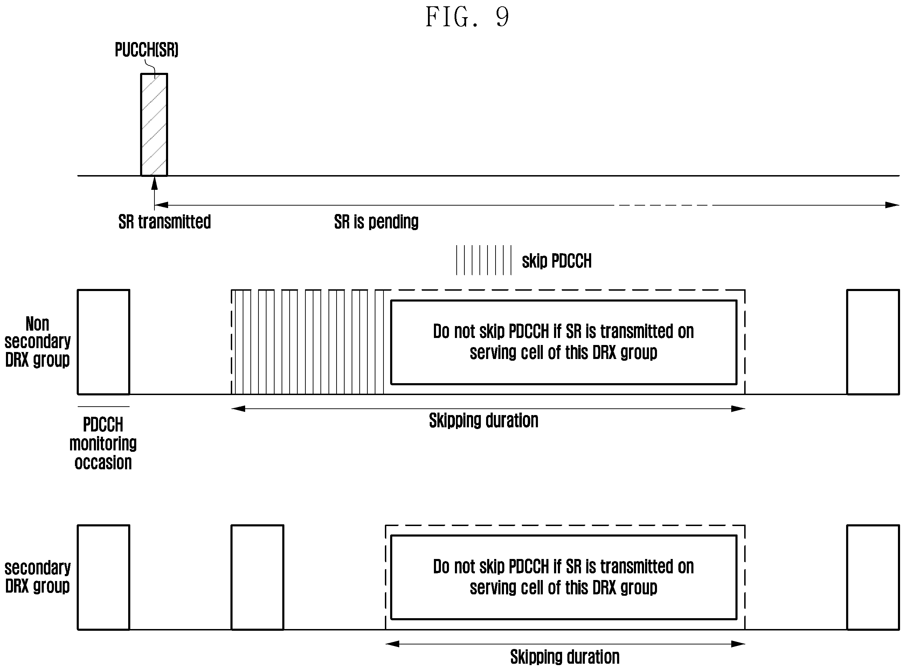

   FIG. 9 illustrates an example of Option 3 for PDCCH skipping for DRX groups when an SR is transmitted and is pending in accordance with an embodiment of the disclosure.
^{∗} Option 3: the UE cancels or suspends or ignores PDCCH skipping) and the gNB cancels or suspends or ignores PDCCH skipping for the UE, on all serving cells of the DRX group of serving cell on which the UE has transmitted the SR, during the PDCCH skipping duration while the scheduling request is pending. Referring the FIG. 9, the SR is pending during the skipping duration in DRX group 1 and DRX group 2. The time duration where skipping duration is common between both DRX groups while the SR is pending, the UE will cancel or suspend or ignore PDCCH skipping and gNB cancels or suspends or ignores PDCCH skipping for the UE in serving cells of either secondary DRX group or non-secondary DRX group depending on where the SR is transmitted as per option 3.
^{∗} Option 4: the UE cancels or suspends or ignores PDCCH skipping and the gNB cancels or suspends or ignores PDCCH skipping for the UE, on all serving cells of the DRX group indicated by the gNB, during the PDCCH skipping duration (while the scheduling request is pending).
^{∗} Option 5: option 1 of method 1.
^{∗} Option 6: option 2 of method 1.

In an embodiment, in the above description, a PDCCH indicating the UE to switch to an empty SSSG (i.e., SSSG not configured with any search space sets) or default SSSG is also considered as a PDCCH skipping indication. Skipping duration can be defined by a timer in this case or it can be the time duration until the UE receives the PDCCH indicating the UE to switch to a non-empty SSSG or non-default SSSG.

In an embodiment, the above operation can also be applied in the RRC_INACTIVE and/or the RRC_IDLE, for example the UE may receive the PDCCH skipping indication during the small data transmission procedure in the RRC_INACTIVE and the SR can be triggered and transmitted in the RRC _INACTIVE state. The PDCCH skipping indication can be indicated in the wakeup signal or the early paging indication or in RAR or MsgB in the RRC_INACTIVE and/or the RRC_IDLE. In an embodiment, for small data transmission procedure in the RRC_INACTIVE or in the RRC IDLE state, if the RA is initiated for SDT, the PDCCH skipping indication can be sent by the gNB in between Msg4 (including contention resolution identity MAC CE) transmission or MsgB including contention resolution identity transmission and RRC Release message transmission. In an embodiment, for small data transmission procedure in the RRC _INACTIVE state or in the RRC_IDLE state, if the RA is initiated for SDT, the PDCCH skipping indication can be sent by the gNB after the successful completion of the random access procedure.

### Method 4

UE is in RRC _CONNECTED state.

The UE monitors the PDCCH in the active DL BWP of SpCell and active DL BWP(s) of activated Secondary cell(s). The PDCCH is monitored in PDCCH monitoring occasions configured by one or more search space configurations of active DL BWP

The UE receives the PDCCH from a serving cell wherein the DCI includes/indicates PDCCH skipping. In an embodiment, in the RRC_CONNECTED state, the UE may indicate to the gNB using a dedicated RRC message whether the UE supports PDCCH skipping. Only if the gNB has received an indication from the UE that the UE supports PDCCH skipping, the gNB sends the PDCCH skipping indication in DCI.

In the RRC_CONNECTED state, Scheduling Request (SR) is used for requesting UL-SCH resources for new transmission. The MAC entity (or CG) may be configured with zero, one, or more SR configurations. The MAC entity is separate for each CG i.e., MCG and SCG. An SR configuration consists of a set of PUCCH resources for the SR across different BWPs and cells. For a logical channel or for Scell beam failure recovery and for consistent LBT failure recovery, at most one PUCCH resource for the SR is configured per BWP. Each SR configuration corresponds to one or more logical channels and/or to Scell beam failure recovery and/or to consistent LBT failure recovery. Each logical channel, Scell beam failure recovery, and consistent LBT failure recovery, may be mapped to zero or one SR configuration, which is configured by the RRC. The SR configuration of the logical channel that triggered a BSR or the SR configuration of the Scell beam failure recovery or the SR configuration of the beam failure recovery of BFD-RS set (TRP) of the cell or the SR configuration of the consistent LBT failure recovery (if such a configuration exists) is considered as corresponding SR configuration for the triggered SR.

When an SR is triggered, it shall be considered as pending until it is canceled.
- All pending SR(s) for BSR triggered prior to the MAC PDU assembly shall be canceled and each respective sr-ProhibitTimer shall be stopped when the MAC PDU is transmitted and this PDU includes a Long or Short BSR MAC CE which contains buffer status up to (and including) the last event that triggered a BSR prior to the MAC PDU assembly. All pending SR(s) for BSR triggered according to the BSR procedure shall be canceled and each respective sr-ProhibitTimer shall be stopped when the UL grant(s) can accommodate all pending data available for transmission.
- If this SR was triggered by beam failure recovery of an Scell and a MAC PDU is transmitted and this PDU includes a BFR MAC CE or a Truncated BFR MAC CE which contains beam failure recovery information for this Scell; or if this SR was triggered by beam failure recovery of an Scell and this Scell is deactivated; or if this SR was triggered by consistent LBT failure recovery of an Scell and a MAC PDU is transmitted and the MAC PDU includes an LBT failure MAC CE that indicates consistent LBT failure for this Scell; or if this SR was triggered by consistent LBT failure recovery of an Scell and all the triggered consistent LBT failure(s) for this Scell are canceled: a UE may cancel the pending SR and stop the corresponding sr-ProhibitTimer, if running.

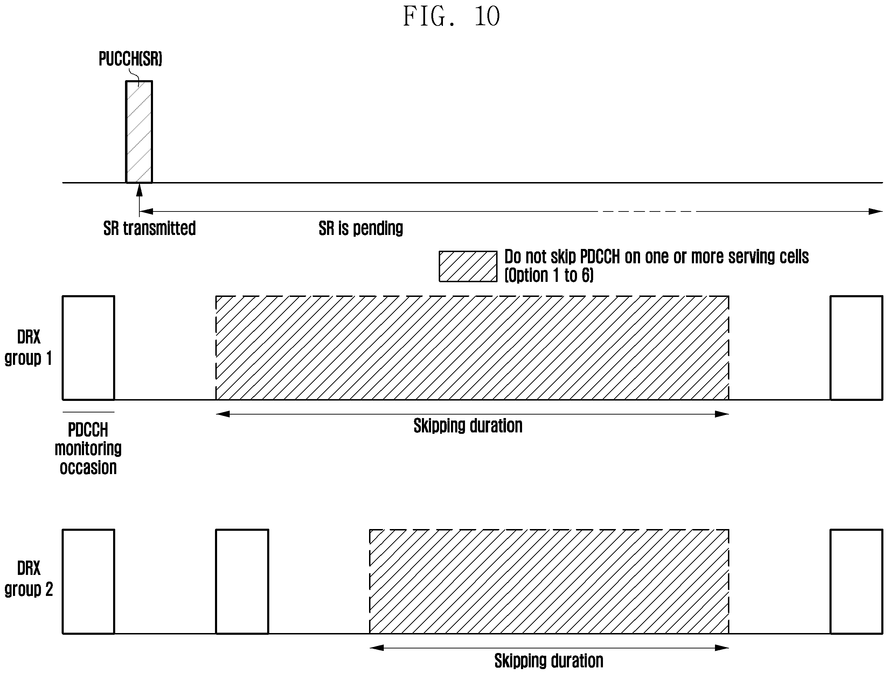

FIG. 10 illustrates an example of PDCCH skipping for a DRX group or DRX groups when an SR is transmitted and is pending in accordance with an embodiment of the disclosure.

In this method of this disclosure it is assumed that the PDCCH skipping indication is for the DRX group. If the PDCCH skipping indication is received from a serving cell for a DRX group, PDCCH skipping is applied during the PDCCH skipping duration for all serving cells (SpCell and active secondary serving cells) of that DRX group.
^{∗} If the PDCCH skipping duration for a DRX group does not occur while the SR is transmitted and is pending, the UE continues PDCCH skipping for the other DRX group. If the PDCCH skipping duration for a DRX group does not occur while the SR is received and is pending (i.e., UL grant for new transmission is not sent), the gNB continues PDCCH skipping for the UE for the other DRX group.
^{∗} If the PDCCH skipping duration for both DRX groups occurs while the SR is pending after transmitting the SR on the PUCCH, the UE cancels or suspends or ignores PDCCH skipping for one or more serving cell(s) using one of the options listed below. If the PDCCH skipping duration for both DRX groups occurs while the SR is received and is pending (i.e., UL grant for new transmission is not sent), the gNB cancels or suspends or ignores PDCCH skipping for the UE for one or more serving cell(s) using one of the options listed below. Referring the FIG. 10, the SR is pending during the skipping duration in DRX group 1 and DRX group 2. The UE will cancel or suspend or ignore PDCCH skipping in one or more serving cells as per option 1 to option 6 described below:
   ^{∗∗} Option 1: The UE cancels or suspends or ignores PDCCH skipping and the gNB cancels or suspends or ignores PDCCH skipping for the UE, on all serving cells of the non-secondary DRX group of CG during the PDCCH skipping duration.
   ^{∗∗} Option 2: The UE cancels or suspends or ignores PDCCH skipping and the gNB cancels or suspends or ignores PDCCH skipping for the UE, on all serving cells of the secondary DRX group of CG during the PDCCH skipping duration.
   ^{∗∗} Option 3: The UE cancels or suspends or ignores PDCCH skipping and the gNB cancels or suspends or ignores PDCCH skipping for the UE, on all serving cells of the DRX group of the serving cell on which the UE has transmitted the SR, during the PDCCH skipping duration.
   ^{∗∗} Option 4: The UE cancels or suspends or ignores PDCCH skipping and the gNB cancels or suspends or ignores PDCCH skipping for the UE, on all serving cells of the DRX group indicated by the gNB, during the PDCCH skipping duration.
   ^{∗∗} Option 5: option 1 of method 2.
   ^{∗∗} Option 6: option 2 of method 2.

In an embodiment, in the above description, the PDCCH indicating the UE to switch to an empty SSSG (i.e., SSSG not configured with any search space sets) or default SSSG is also considered as a PDCCH skipping indication. Skipping duration can be defined by a timer in this case or it can be the time duration until the UE receives the PDCCH indicating the UE to switch to a non-empty SSSG or non-default SSSG.

In an embodiment, the above operation can also be applied in the RRC_INACTIVE and/or the RRC_IDLE, for example the UE may receive the PDCCH skipping indication during the small data transmission procedure in the RRC_INACTIVE and the SR can be triggered and transmitted in the RRC _INACTIVE state. The PDCCH skipping indication can be indicated in wakeup signal or early paging indication or in RAR or MsgB in the RRC_INACTIVE and/or the RRC_IDLE. In an embodiment, for small data transmission procedure in the RRC_INACTIVE or in the RRC_IDLE state, if the RA is initiated for SDT, the PDCCH skipping indication can be sent by the gNB in between Msg4 (including contention resolution identity MAC CE) transmission or MsgB including contention resolution identity transmission and RRC Release message transmission. In an embodiment, for small data transmission procedure in the RRC _INACTIVE state or in the RRC_IDLE state, if the RA is initiated for SDT, the PDCCH skipping indication can be sent by the gNB after the successful completion of random access procedure.

### Method 5

UE is in RRC _CONNECTED state.

The UE monitors the PDCCH in the active DL BWP of the SpCell and active DL BWP(s) of activated Secondary cell(s). The PDCCH is monitored in PDCCH monitoring occasions configured by one or more search space configurations of active DL BWP

The UE receives PDCCH from a serving cell wherein the DCI includes/indicates PDCCH skipping. In an embodiment, in the RRC_CONNECTED state, the UE may indicate to the gNB using a dedicated RRC message whether the UE supports PDCCH skipping. Only if the gNB has received an indication from the UE that the UE supports PDCCH skipping, the gNB sends the PDCCH skipping indication in DCI.

In the RRC_CONNECTED state, Scheduling Request (SR) is used for requesting UL-SCH resources for new transmission. The MAC entity (or CG) may be configured with zero, one, or more SR configurations. The MAC entity is separate for each CG i.e., MCG and SCG. An SR configuration consists of a set of PUCCH resources for SR across different BWPs and cells. For a logical channel or for Scell beam failure recovery and for consistent LBT failure recovery, at most one PUCCH resource for SR is configured per BWP. Each SR configuration corresponds to one or more logical channels and/or to Scell beam failure recovery and/or to consistent LBT failure recovery. Each logical channel, Scell beam failure recovery, and consistent LBT failure recovery, may be mapped to zero or one SR configuration, which is configured by the RRC. The SR configuration of the logical channel that triggered a BSR or the SR configuration of the Scell beam failure recovery or the SR configuration of the beam failure recovery of BFD-RS set (TRP) of the cell or the SR configuration of the consistent LBT failure recovery (if such a configuration exists) is considered as corresponding SR configuration for the triggered SR.

When an SR is triggered, it shall be considered as pending until it is canceled.

All pending SR(s) for BSR triggered prior to the MAC PDU assembly shall be canceled and each respective sr-ProhibitTimer shall be stopped when the MAC PDU is transmitted and this PDU includes a Long or Short BSR MAC CE which contains buffer status up to (and including) the last event that triggered a BSR prior to the MAC PDU assembly. All pending SR(s) for BSR triggered according to the BSR procedure shall be canceled and each respective sr-ProhibitTimer shall be stopped when the UL grant(s) can accommodate all pending data available for transmission.

- If this SR was triggered by beam failure recovery of an Scell and a MAC PDU is transmitted and this PDU includes a BFR MAC CE or a Truncated BFR MAC CE which contains beam failure recovery information for this Scell; or if this SR was triggered by beam failure recovery of an Scell and this Scell is deactivated; or if this SR was triggered by consistent LBT failure recovery of an Scell and a MAC PDU is transmitted and the MAC PDU includes an LBT failure MAC CE that indicates consistent LBT failure for this Scell; or if this SR was triggered by consistent LBT failure recovery of an Scell and all the triggered consistent LBT failure(s) for this Scell are canceled: a UE may cancel the pending SR and stop the corresponding sr-ProhibitTimer, if running.

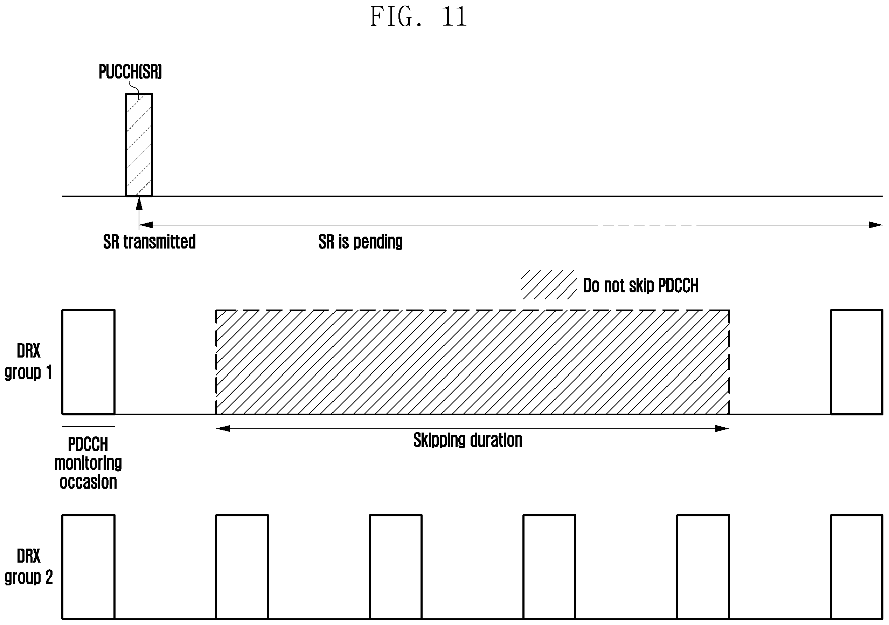

FIG. 11 illustrates an example of PDCCH skipping for a DRX group when an SR is transmitted and is pending in accordance with an embodiment of the disclosure.

In this method of this disclosure it is assumed that the PDCCH skipping indication is for the DRX group. If the PDCCH skipping indication is received from a serving cell for a DRX group, PDCCH skipping is applied during the PDCCH skipping duration for all serving cells (SpCell and active secondary serving cells) of that DRX group.
- if the PDCCH skipping duration for a DRX group occurs while SR is transmitted and is pending, the UE cancels or suspends or ignores PDCCH skipping for that DRX group. If the PDCCH skipping duration for a DRX group occurs while the SR is received and is pending (i.e., UL grant for new transmission is not sent), the gNB cancels or suspends or ignores PDCCH skipping for that DRX group. Referring the FIG. 11, the PDCCH skipping duration for the DRX group 1 occurs while the SR is transmitted and is pending, the UE cancels or suspends PDCCH skipping for DRX group 1.
- (Alternate) if the PDCCH skipping duration for a DRX group occurs while the SR is transmitted and is pending, the UE cancels or suspends or ignores PDCCH skipping for that DRX group in the portion/part of PDCCH skipping duration which overlaps with the pending SR duration.

In an embodiment, in the above description, the PDCCH indicating the UE to switch to an empty SSSG (i.e., SSSG not configured with any search space sets) or default SSSG is also considered as a PDCCH skipping indication. Skipping duration can be defined by a timer in this case or it can be the time duration until the UE receives the PDCCH indicating the UE to switch to a non-empty SSSG or non-default SSSG.

In an embodiment, the above operation can also be applied in the RRC_INACTIVE and/or the RRC_IDLE, for example the UE may receive the PDCCH skipping indication during the small data transmission procedure in the RRC_INACTIVE and the SR can be triggered and transmitted in the RRC _INACTIVE state. The PDCCH skipping indication can be indicated in the wakeup signal or early paging indication or in RAR or MsgB in the RRC_INACTIVE and/or the RRC_IDLE. In an embodiment, for a small data transmission procedure in the RRC_INACTIVE or in the RRC_IDLE state, if the RA is initiated for SDT, the PDCCH skipping indication can be sent by the gNB in between Msg4 (including contention resolution identity MAC CE) transmission or MsgB including contention resolution identity transmission and RRC Release message transmission. In an embodiment, for the small data transmission procedure in the RRC_INACTIVE state or in the RRC_IDLE state, if the RA is initiated for SDT, the PDCCH skipping indication can be sent by the gNB after the successful completion of random access procedure.

### Method 6

UE is in RRC_CONNECTED state.

The UE monitors PDCCH in the active DL BWP of the SpCell and active DL BWP(s) of activated Secondary cell(s). The PDCCH is monitored in PDCCH monitoring occasions configured by one or more search space configurations of active DL BWP

The UE receives the PDCCH from a serving cell wherein the DCI includes/indicates PDCCH skipping. In an embodiment, in the RRC _CONNECTED state, the UE may indicate to the gNB using a dedicated RRC message whether the UE supports PDCCH skipping. Only if the gNB has received the indication from the UE that the UE supports PDCCH skipping, the gNB sends the PDCCH skipping indication in DCI.

In the RRC _CONNECTED state, Scheduling Request (SR) is used for requesting UL-SCH resources for new transmission. The MAC entity (or CG) may be configured with zero, one, or more SR configurations. MAC entity is separate for each CG i.e., MCG and SCG. An SR configuration consists of a set of PUCCH resources for SR across different BWPs and cells. For a logical channel or for Scell beam failure recovery and for consistent LBT failure recovery, at most one PUCCH resource for SR is configured per BWP. Each SR configuration corresponds to one or more logical channels and/or to Scell beam failure recovery and/or to consistent LBT failure recovery. Each logical channel, Scell beam failure recovery, and consistent LBT failure recovery, may be mapped to zero or one SR configuration, which is configured by the RRC. The SR configuration of the logical channel that triggered a BSR or the SR configuration of the Scell beam failure recovery or the SR configuration of the beam failure recovery of BFD-RS set (TRP) of the cell or the SR configuration of the consistent LBT failure recovery (if such a configuration exists) is considered as corresponding SR configuration for the triggered SR.

When an SR is triggered, it shall be considered as pending until it is canceled.
- All pending SR(s) for BSR triggered prior to the MAC PDU assembly shall be canceled and each respective sr-ProhibitTimer shall be stopped when the MAC PDU is transmitted and this PDU includes a Long or Short BSR MAC CE which contains buffer status up to (and including) the last event that triggered a BSR prior to the MAC PDU assembly. All pending SR(s) for BSR triggered according to the BSR procedure shall be canceled and each respective sr-ProhibitTimer shall be stopped when the UL grant(s) can accommodate all pending data available for transmission.
- If this SR was triggered by beam failure recovery of an Scell and a MAC PDU is transmitted and this PDU includes a BFR MAC CE or a Truncated BFR MAC CE which contains beam failure recovery information for this Scell; or if this SR was triggered by beam failure recovery of an Scell and this Scell is deactivated; or if this SR was triggered by consistent LBT failure recovery of an Scell and a MAC PDU is transmitted and the MAC PDU includes an LBT failure MAC CE that indicates consistent LBT failure for this Scell; or if this SR was triggered by consistent LBT failure recovery of an Scell and all the triggered consistent LBT failure(s) for this Scell are canceled: a UE may cancel the pending SR and stop the corresponding sr-ProhibitTimer, if running.

In this method of this disclosure it is assumed that the PDCCH skipping indication is cell specific. If the PDCCH skipping indication is received for a serving cell, PDCCH skipping is applied during the PDCCH skipping duration for that serving cell. In case there are several serving cells in a CG, the gNB can send the PDCCH skipping indications separately for zero, one or more serving cells.
^{∗} if there is at least one serving cell for which the PDCCH skipping duration does not occur (e.g., the PDCCH skipping indication is not received) while the SR is transmitted and is pending, the UE continues PDCCH skipping for the serving cells for which PDCCH skipping indication(s) are received; Otherwise, the UE cancels or suspends PDCCH skipping for one or more serving cell(s) while the SR is pending after transmitting the SR on the PUCCH using one of the options described below. If there is at least one serving cell for which the PDCCH skipping duration does not occur while the SR is received and is pending (i.e., UL grant for new transmission is not sent), the gNB continues PDCCH skipping for the serving cells for which the PDCCH skipping indication(s) are transmitted, otherwise, the gNB cancels or suspends PDCCH skipping for one or more serving cell(s) while the SR is received and is pending using one of the options described below.
^{∗∗} Option 1: The UE cancels or suspends or ignores PDCCH skipping and the gNB cancels or suspends or ignores PDCCH skipping for the UE, on all serving cells of the non-secondary DRX group during the PDCCH skipping duration. Alternately, the UE cancels or suspends or ignores PDCCH skipping and the gNB cancels or suspends or ignores PDCCH skipping for the UE, on all serving cells of the non-secondary DRX group during the PDCCH skipping duration while the scheduling request is pending i.e., PDCCH skipping is canceled or suspended or ignored on all serving cells of the of the non-secondary DRX group of the CG in the portion of PDCCH skipping duration which overlaps with pending SR duration. Here the CG is the cell group of the cell whose PUCCH resources are used by the UE for transmitting the scheduling request.
^{∗∗} Option 2: The UE cancels or suspends or ignores PDCCH skipping and the gNB cancels or suspends or ignores PDCCH skipping for the UE, on all serving cells of the secondary DRX group during the PDCCH skipping duration. Alternately, the UE cancels or suspends or ignores PDCCH skipping and the gNB cancels or suspends or ignores PDCCH skipping for the UE, on all serving cells of the secondary DRX group during the PDCCH skipping duration while the scheduling request is pending i.e., PDCCH skipping is canceled or suspended or ignored on all serving cells of the of the secondary DRX group of the CG in the portion of PDCCH skipping duration which overlaps with pending SR duration. Here the CG is the cell group of the cell whose PUCCH resources are used by UE for transmitting scheduling request.
^{∗∗} Option 3: The UE cancels or suspends or ignores PDCCH skipping and the gNB cancels or suspends or ignores PDCCH skipping for the UE, on all serving cells of the DRX group of serving cell on which the UE has transmitted the SR, during the PDCCH skipping duration. Alternately, the UE cancels or suspends or ignores PDCCH skipping and the gNB cancels or suspends or ignores PDCCH skipping for the UE, on all serving cells of the DRX group of serving cell on which the UE has transmitted the SR, during the PDCCH skipping duration while the scheduling request is pending i.e., PDCCH skipping is canceled or suspended or ignored on all serving cells of the DRX group of the serving cell on which the UE has transmitted the SR in the portion of the PDCCH skipping duration which overlaps with the pending SR duration.
^{∗∗} Option 4: The UE cancels or suspends or ignores PDCCH skipping and the gNB cancels or suspends or ignores PDCCH skipping for the UE, on all serving cells of the DRX group indicated by the gNB, during the PDCCH skipping duration. Alternately, the UE cancels or suspends or ignores PDCCH skipping on all serving cells of the DRX group indicated by the gNB, during the PDCCH skipping duration while the scheduling request is pending i.e., PDCCH skipping is canceled or suspended or ignored on all serving cells of the of the DRX group indicated by the gNB, in the portion of PDCCH skipping duration which overlaps with the pending SR duration.
^{∗∗} Option 5: The UE cancels or suspends or ignores PDCCH skipping and the gNB cancels or suspends or ignores PDCCH skipping for the UE, on all serving cells of the CG during the PDCCH skipping duration. Alternately, the UE cancels or suspends or ignores PDCCH skipping and the gNB cancels or suspends or ignores PDCCH skipping for the UE, on all serving cells of the CG, during the PDCCH skipping duration while the scheduling request is pending i.e., PDCCH skipping is canceled or suspended or ignored on all serving cells of the CG, in the portion of PDCCH skipping duration which overlaps with pending SR duration. Here the CG is the cell group of the cell whose PUCCH resources are used by the UE for transmitting scheduling request.
^{∗∗} Option 6: Amongst all serving cells of the CG, the UE cancels or suspends PDCCH skipping and the gNB cancels or suspends or ignores PDCCH skipping for the UE, on specific serving cell(s) during the PDCCH skipping duration. Alternately, the UE cancels or suspends or ignores PDCCH skipping and the gNB cancels or suspends or ignores PDCCH skipping for the UE, on specific serving cell(s), during the PDCCH skipping duration while the scheduling request is pending i.e., PDCCH skipping is canceled or suspended or ignored on specific serving cell(s), in the portion of the PDCCH skipping duration which overlaps with the pending SR duration. Here the CG is the cell group of the cell whose PUCCH resources are used by the UE for transmitting the scheduling request.
   ^{∗∗∗} Specific serving cell can be the SpCell of the CG of the serving cell on which the UE has transmitted the scheduling request; specific serving cell can be the serving cell on which the UE has transmitted the scheduling request.
   ^{∗∗∗} Specific serving cell can be the serving cell of the CG on which PUCCH resources are configured; specific serving cell(s) can be signaled by the gNB. Here the CG is the cell group of the cell whose PUCCH resources are used by the UE for transmitting the scheduling request.

In an embodiment, in the above description, the PDCCH indicating the UE to switch to an empty SSSG (i.e., SSSG not configured with any search space sets) or default SSSG is also considered as a PDCCH skipping indication. Skipping duration can be defined by a timer in this case or it can be the time duration until the UE receives the PDCCH indicating the UE to switch to a non-empty SSSG or non-default SSSG.

In an embodiment, the above operation can also be applied in the RRC_INACTIVE and/or the RRC_IDLE, for example the UE may receive the PDCCH skipping indication during the small data transmission procedure in the RRC_INACTIVE and the SR can be triggered and transmitted in the RRC _INACTIVE state. The PDCCH skipping indication can be indicated in the wakeup signal or early paging indication or in RAR or MsgB in the RRC _INACTIVE and/or the RRC_IDLE. In an embodiment, for the small data transmission procedure in the RRC_INACTIVE or in the RRC_IDLE state, if the RA is initiated for SDT, the PDCCH skipping indication can be sent by the gNB in between Msg4 (including contention resolution identity MAC CE) transmission or MsgB including contention resolution identity transmission and RRC Release message transmission. In an embodiment, for the small data transmission procedure in the RRC _INACTIVE state or in the RRC_IDLE state, if the RA is initiated for SDT, the PDCCH skipping indication can be sent by the gNB after the successful completion of random access procedure.

### Method 7

UE is in RRC _CONNECTED state.

The UE monitors the PDCCH in the active DL BWP of the SpCell and active DL BWP(s) of activated Secondary cell(s). The PDCCH is monitored in PDCCH monitoring occasions configured by one or more search space configurations of active DL BWP

The UE receives the PDCCH from a serving cell wherein the DCI includes/indicates PDCCH skipping. In an embodiment, in the RRC _CONNECTED state, the UE may indicate to the gNB using a dedicated RRC message whether the UE supports PDCCH skipping. Only if the gNB has received the indication from the UE that the UE supports PDCCH skipping, the gNB sends the PDCCH skipping indication in the DCI.

In the RRC _CONNECTED state, Scheduling Request (SR) is used for requesting UL-SCH resources for new transmission. The MAC entity (or CG) may be configured with zero, one, or more SR configurations. The MAC entity is separate for each CG i.e., MCG and SCG. An SR configuration consists of a set of PUCCH resources for SR across different BWPs and cells. For a logical channel or for SCell beam failure recovery and for consistent LBT failure recovery, at most one PUCCH resource for SR is configured per BWP. Each SR configuration corresponds to one or more logical channels and/or to SCell beam failure recovery and/or to consistent LBT failure recovery. Each logical channel, SCell beam failure recovery, and consistent LBT failure recovery, may be mapped to zero or one SR configuration, which is configured by the RRC. The SR configuration of the logical channel that triggered a BSR or the SR configuration of the SCell beam failure recovery or the SR configuration of the beam failure recovery of BFD-RS set (TRP) of cell or the SR configuration of the consistent LBT failure recovery (if such a configuration exists) is considered as corresponding SR configuration for the triggered SR.

When an SR is triggered, it shall be considered as pending until it is canceled.
- All pending SR(s) for BSR triggered prior to the MAC PDU assembly shall be canceled and each respective sr-ProhibitTimer shall be stopped when the MAC PDU is transmitted and this PDU includes a Long or Short BSR MAC CE which contains buffer status up to (and including) the last event that triggered a BSR prior to the MAC PDU assembly. All pending SR(s) for BSR triggered according to the BSR procedure shall be canceled and each respective sr-ProhibitTimer shall be stopped when the UL grant(s) can accommodate all pending data available for transmission.
- If this SR was triggered by beam failure recovery of an SCell and a MAC PDU is transmitted and this PDU includes a BFR MAC CE or a Truncated BFR MAC CE which contains beam failure recovery information for this SCell; or if this SR was triggered by beam failure recovery of an SCell and this SCell is deactivated; or if this SR was triggered by consistent LBT failure recovery of an SCell and a MAC PDU is transmitted and the MAC PDU includes an LBT failure MAC CE that indicates consistent LBT failure for this SCell; or if this SR was triggered by consistent LBT failure recovery of an SCell and all the triggered consistent LBT failure(s) for this SCell are canceled: a UE may cancel the pending SR and stop the corresponding sr-ProhibitTimer, if running.

In this method of this disclosure it is assumed that the PDCCH skipping indication is cell specific. If the PDCCH skipping indication is received for a serving cell, PDCCH skipping is applied during the PDCCH skipping duration for that serving cell. In case there are several serving cells in a CG, the gNB can send the PDCCH skipping indications separately for zero, one or more serving cells.
^{∗} For each serving cell of a CG the UE performs the following operation: if the PDCCH skipping duration for the serving cell occurs while the SR is transmitted and is pending, the UE cancels or suspends or ignores PDCCH skipping for that serving cell during the PDCCH skipping duration; if the PDCCH skipping duration for the serving cell occurs while the SR is received and is pending, the gNB cancels or suspends PDCCH skipping for that serving cell during the PDCCH skipping duration. Here the CG is the cell group of the cell whose PUCCH resources are used by the UE for transmitting the scheduling request. For example, let's say there are three serving cells (cell 1, cell 2 and cell 3) in a CG. The UE has transmitted the SR using PUCCH resources of a serving cell of this CG and the SR is pending. The PDCCH skipping indication is received for cell 1 and cell 3 before/after the SR is transmitted. If the skipping duration of cell 1 as indicated by the PDCCH skipping indication for cell 1 occurs while the SR is pending, the UE cancels or suspends or ignores PDCCH skipping for cell 1 during the PDCCH skipping duration. If the skipping duration of cell 3 as indicated by PDCCH skipping indication for cell 3 occurs while the SR is pending, the UE cancels or suspends or ignores PDCCH skipping for cell 3 during the PDCCH skipping duration.
^{∗} (Alternate) For each serving cell of a CG the UE performs the following operation: if the PDCCH skipping duration for the serving cell occurs while the SR is transmitted and is pending, the UE cancels or suspends PDCCH skipping for that serving cell in the portion of PDCCH skipping duration which overlaps with the pending SR duration; if the PDCCH skipping duration for a serving cell occurs while the SR is received and is pending, the gNB cancels or suspends PDCCH skipping for that serving cell in the portion/part of PDCCH skipping duration which overlaps with the pending SR duration. Here the CG is the cell group of the cell whose PUCCH resources are used by the UE for transmitting the scheduling request. The portion/part may be the completed PDCCH skipping duration. The portion/part of the PDCCH skipping duration of the serving cell which does not overlap with the pending SR duration, the UE/gNB does not cancel or suspend or ignore PDCCH skipping for the serving cell. For example, let's say there are three serving cells (cell 1, cell 2 and cell 3) in a CG. The UE has transmitted the SR using PUCCH resources of a serving cell of this CG and the SR is pending. The PDCCH skipping indication is received for cell 1 and cell 3 before/after the SR is transmitted. If the skipping duration of cell 1 as indicated by the PDCCH skipping indication for cell 1 occurs while the SR is pending, the UE cancels or suspends or ignores PDCCH skipping for cell 1 during the portion/part of the PDCCH skipping duration which overlaps with pending SR duration. Note that a portion/part of the PDCCH skipping duration or the complete PDCCH skipping duration may overlap with the SR pending duration. If the skipping duration of cell 3 as indicated by the PDCCH skipping indication for cell 3 occurs while the SR is pending, the UE cancels or suspends or ignores PDCCH skipping for cell 3 during the portion/part of the PDCCH skipping duration which overlaps with the pending SR duration. Note that the portion/part of the PDCCH skipping duration or the complete PDCCH skipping duration may overlap with the SR pending duration.

In methods 1 to 7 described in this disclosure, in the skipping duration, upon receiving the PDCCH skipping indication, the UE skips PDCCH monitoring (and the gNB skips PDCCH transmission for the UE) addressed to the 1st set of RNTIs and continues monitoring PDCCH monitoring addressed to the 2nd set of RNTIs. So in those methods, canceling/suspending skipping or not skipping PDCCH in PDCCH skipping duration means, monitoring PDCCH monitoring (or transmitting PDCCH by the gNB) addressed to the 1st set of RNTIs in the skipping duration.
^{∗} The 1st and 2nd set of RNTIs can be pre-defined.
^{∗} In an embodiment, the 2nd set of RNTIs may include RNTIs (e.g., RA-RNTI, P-RNTI, SI-RNTI, SL-RNTI, MSGB-RNTI) other than RNTIs C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. 1st set of RNTIs include C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI.
^{∗} In an embodiment, the 1st set of RNTIs include all the RNTIs which the UE monitors in the RRC _CONNECTED.
^{∗} In an embodiment, the 1st set of RNTIs include all the RNTIs which the UE monitors in the RRC _CONNECTED except RNTIs related to SL communication.

In an embodiment, in the above description, the PDCCH indicating the UE to switch to an empty SSSG (i.e., SSSG not configured with any search space sets) or default SSSG is also considered as a PDCCH skipping indication. Skipping duration can be defined by a timer in this case or it can be the time duration until the UE receives the PDCCH indicating the UE to switch to a non-empty SSSG or non-default SSSG.

In an embodiment, the above operation can also be applied in the RRC_INACTIVE and/or the RRC_IDLE, for example the UE may receive the PDCCH skipping indication during the small data transmission procedure in the RRC_INACTIVE and the SR can be triggered and transmitted in the RRC _INACTIVE state. The PDCCH skipping indication can be indicated in the wakeup signal or early paging indication or in RAR or MsgB in the RRC _INACTIVE and/or the RRC_IDLE. In an embodiment, for the small data transmission procedure in the RRC_INACTIVE or in the RRC_IDLE state, if the RA is initiated for SDT, the PDCCH skipping indication can be sent by the gNB in between Msg4 (including contention resolution identity MAC CE) transmission or MsgB including contention resolution identity transmission and RRC Release message transmission. In an embodiment, for small data transmission procedure in the RRC _INACTIVE state or in the RRC_IDLE state, if the RA is initiated for SDT, the PDCCH skipping indication can be sent by the gNB after the successful completion of the random access procedure.

In an embodiment, the methods 1 to 7 described in this disclosure can be applied in the RRC_INACTIVE and/or the RRC_IDLE by replacing the SR transmission by the RRC message transmission (e.g., RRC Connection setup request, RRC resume request), replacing the SR pending duration by pending duration (duration when T300 is running in case of RRC connection setup request, duration when T319 is running in case of resume request) for receiving response (e.g., RRCSetup, RRCResume) to RRC message transmission.

In methods 1 to 7 described in this disclosure, in an embodiment, if criteria (as defined in methods 1 to 7) to cancel/suspend skipping is met, the UE may not apply skipping cancelation/suspension, if the skipping duration does not extend until the end of active time during the DRX operation.

In methods 1 to 7 described in this disclosure, in an embodiment, if criteria (as defined in methods 1 to 7) to cancel/suspend skipping is met, the UE may apply skipping cancelation/suspension only for a part/portion of the skipping duration wherein the length of the part/portion can be pre-defined or signaled by the gNB in RRC/DCI/MAC CE, the unit in which length is specified can be in slots/symbols/subframes/frames/number of PDCCH monitoring occasions.

In methods 1 to 7 described in this disclosure, in an embodiment, if criteria (as defined in methods 1 to 7) to cancel/suspend skipping is met, the UE may apply skipping cancelation/suspension only for first/earliest PDCCH monitoring occasion in the skipping duration.

In methods 1 to 7 described in this disclosure, in an embodiment, if criteria (as defined in methods 1 to 7) to cancel/suspend skipping is met, the UE may apply skipping cancelation/suspension for earliest 'N' PDCCH monitoring occasion in the skipping duration, where parameter 'N' can be pre-defined or signaled by the gNB in RRC message or system information.

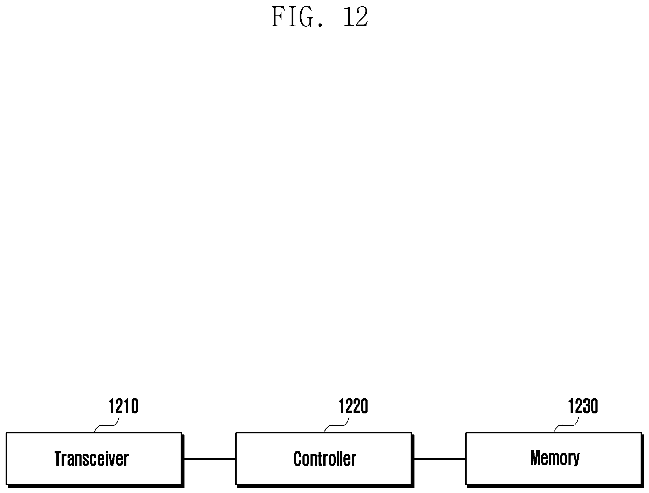

FIG. 12 is a block diagram of a terminal according to an embodiment of the disclosure.

Referring to FIG. 12, a terminal includes a transceiver 1210, a controller 1220 and a memory 1230. The controller 1220 may refer to a circuitry, an application-specific integrated circuit (ASIC), or at least one processor. The transceiver 1210, the controller 1220 and the memory 1230 are configured to perform the operations of the UE illustrated in the figures, e.g., FIGS. 1 to 11, or described above. Although the transceiver 1210, the controller 1220 and the memory 1230 are shown as separate entities, they may be realized as a single entity like a single chip. Or, the transceiver 1210, the controller 1220 and the memory 1230 may be electrically connected to or coupled with each other.

The transceiver 1210 may transmit and receive signals to and from other network entities, e.g., a base station.

The controller 1220 may control the UE to perform functions according to one of the embodiments described above.

For example, the controller 1220 is configured to receive, from a base station via the transceiver 1210, a radio resource control (RRC) message including information on a physical downlink control channel (PDCCH) skipping duration, receive, from the base station via the transceiver 1210, downlink control information (DCI) indicating a PDCCH skipping for a serving cell of a cell group, and ignore the PDCCH skipping on all serving cells of the cell group, in case that a scheduling request (SR) is sent on the serving cell of the cell group and is pending.

In an embodiment, the operations of the terminal may be implemented using the memory 1230 storing corresponding program codes. Specifically, the terminal may be equipped with the memory 1230 to store program codes implementing desired operations. To perform the desired operations, the controller 1220 may read and execute the program codes stored in the memory 1230 by using a processor or a central processing unit (CPU).

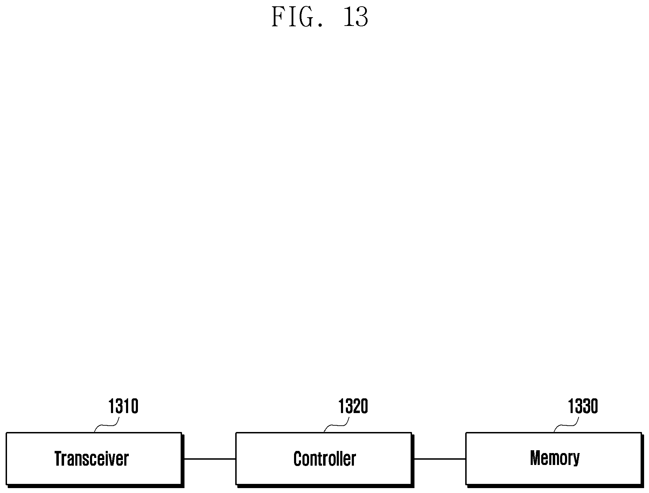

FIG. 13 is a block diagram of a base station according to an embodiment of the disclosure.

Referring to FIG. 13, a base station includes a transceiver 1310, a controller 1320 and a memory 1330. The transceiver 1310, the controller 1320 and the memory 1330 are configured to perform the operations of the network (e.g., gNB) illustrated in the figures, e.g., FIGS. 1 to 11, or described above. Although the transceiver 1310, the controller 1320 and the memory 1330 are shown as separate entities, they may be realized as a single entity like a single chip. The transceiver 1310, the controller 1320 and the memory 1330 may be electrically connected to or coupled with each other.

The transceiver 1310 may transmit and receive signals to and from other network entities, e.g., a terminal.

The controller 1320 may control the base station to perform functions according to one of the embodiments described above. The controller 1320 may refer to a circuitry, an ASIC, or at least one processor.

For example, the controller 1320 is configured to transmit, to a terminal via the transceiver 1310, a radio resource control (RRC) message including information on a physical downlink control channel (PDCCH) skipping duration, and transmit to the terminal via the transceiver 1310, downlink control information (DCI) indicating a PDCCH skipping for a serving cell of a cell group. The PDCCH skipping is ignored on all serving cells of the cell group, in case that a scheduling request (SR) is received on the serving cell of the cell group and is pending.

In an embodiment, the operations of the base station may be implemented using the memory 1330 storing corresponding program codes. Specifically, the base station may be equipped with the memory 1330 to store program codes implementing desired operations. To perform the desired operations, the controller 1320 may read and execute the program codes stored in the memory 1330 by using a processor or a CPU.

While the disclosure has been shown and described with reference to various embodiments thereof, it will be understood by those skilled in the art that various changes in form and details may be made therein without departing from the spirit and scope of the disclosure as defined by the appended claims and their equivalents.

As described above, embodiments disclosed in the specification and drawings are merely used to present specific examples to easily explain the contents of the disclosure and to help understanding, but are not intended to limit the scope of the disclosure. Accordingly, the scope of the disclosure should be analyzed to include all changes or modifications derived based on the technical concept of the disclosure in addition to the embodiments disclosed herein.

Although the present disclosure has been described with various embodiments, various changes and modifications may be suggested to one skilled in the art. It is intended that the present disclosure encompass such changes and modifications as fall within the scope of the appended claims.

## Claims

1. A method performed by a terminal in a wireless communication system, the method comprising:
receiving, from a base station, a radio resource control, RRC, message including information on a physical downlink control channel, PDCCH, skipping duration;
receiving, from the base station, downlink control information, DCI, indicating a PDCCH skipping for a serving cell of a cell group; and
ignoring the PDCCH skipping on all serving cells of the cell group, in case that a scheduling request, SR, is sent on the serving cell of the cell group and is pending.

2. The method of claim 1, further comprising:
performing a PDCCH monitoring on all serving cells of the cell group during the PDCCH skipping duration while the SR is pending; and
skipping the PDCCH monitoring during the PDCCH skipping duration after the SR is canceled.

3. The method of claim 1, wherein the DCI is for scheduling a physical uplink shared channel, PUSCH, or a physical downlink shared channel, PDSCH.

4. The method of claim 1, wherein the DCI indicates stop of a PDCCH monitoring according to a search space set group.

5. A method performed by a base station in a wireless communication system, the method comprising:
transmitting, to a terminal, a radio resource control, RRC, message including information on a physical downlink control channel, PDCCH, skipping duration; and
transmitting, to the terminal, downlink control information, DCI, indicating a PDCCH skipping for a serving cell of a cell group;
wherein the PDCCH skipping is ignored on all serving cells of the cell group, in case that a scheduling request, SR, is received on the serving cell of the cell group and is pending.

6. The method of claim 5, further comprising:
canceling the PDCCH skipping on all serving cells of the cell group during the PDCCH skipping duration while the SR is pending; and
skipping a PDCCH transmission during the PDCCH skipping duration after the SR is canceled.

7. The method of claim 5, wherein the DCI is for scheduling a physical uplink shared channel, PUSCH, or a physical downlink shared channel, PDSCH.

8. The method of claim 5, wherein the DCI indicates stop of a PDCCH monitoring according to a search space set group.

9. A terminal in a wireless communication system, the terminal comprising:
a transceiver (1210); and
a controller (1220) configured to:
receive, from a base station via the transceiver (1210), a radio resource control, RRC, message including information on a physical downlink control channel, PDCCH, skipping duration,
receive, from the base station via the transceiver (1210), downlink control information, DCI, indicating a PDCCH skipping for a serving cell of a cell group, and
ignore the PDCCH skipping on all serving cells of the cell group, in case that a scheduling request, SR, is sent on the serving cell of the cell group and is pending.

10. The terminal of claim 9, wherein the controller (1220) is further configured to:
perform a PDCCH monitoring on all serving cells of the cell group during the PDCCH skipping duration while the SR is pending, and
skip the PDCCH monitoring during the PDCCH skipping duration after the SR is canceled.

11. The terminal of claim 9, wherein the DCI is for scheduling a physical uplink shared channel, PUSCH, or a physical downlink shared channel, PDSCH.

12. The terminal of claim 9, wherein the DCI indicates stop of a PDCCH monitoring according to a search space set group.

13. A base station in a wireless communication system, the base station comprising:
a transceiver (1310); and
a controller (1320) configured to:
transmit, to a terminal via the transceiver (1310), a radio resource control, RRC, message including information on a physical downlink control channel, PDCCH, skipping duration, and
transmit, to the terminal via the transceiver (1310), downlink control information, DCI, indicating a PDCCH skipping for a serving cell of a cell group,
wherein the PDCCH skipping is ignored on all serving cells of the cell group, in case that a scheduling request, SR, is received on the serving cell of the cell group and is pending.

14. The base station of claim 13, wherein the controller (1320) is further configured to:
cancel the PDCCH skipping on all serving cells of the cell group during the PDCCH skipping duration while the SR is pending, and
skip a PDCCH transmission during the PDCCH skipping duration after the SR is canceled.

15. The base station of claim 13, wherein the DCI is for scheduling a physical uplink shared channel, PUSCH, or a physical downlink shared channel, PDSCH, and indicates stop of a PDCCH monitoring according to a search space set group.
